# EUROPEAN PATENT APPLICATION

(11) **EP 4 435 802 A1**
(43) Date of publication of application: **25.09.2024**
(21) Application number: 22895304.8
(22) Date of filing: 17.10.2022
(51) Int. Cl.: G21F 9/06

(54) **METHOD FOR TREATING TO-BE-TREATED WATER CONTAINING TRITIATED WATER AND LIGHT WATER**

(30) Priority: 19.11.2021 JP 2021188640
(71) Applicant: Imageone Co., Ltd., Tokyo 141-0032 (JP)
(72) Inventor: NAKAMURA, Satoshi, Tokyo 136-0072 (JP)
(74) Representative: Murgitroyd & Company
(86) International application number: PCT/JP2022/038545
(87) International publication number: WO 2023/090018

(57) **Abstract**

A method for treating to-be-treated water containing tritiated water and light water, the method includes providing a temperature difference in a heavy water gas hydrate substrate which may contain tritiated water, and to-be-treated water containing tritiated water and light water in the presence of a guest molecular gas based on a heavy water gas hydrate crystallization temperature zone and its vicinity under a pressure condition where heavy water gas hydrate or tritiated water gas hydrate can be crystallized.

## Description

### TECHNICAL FIELD

The present invention relates to a method for treating to-be-treated water containing tritiated water and light water, and a method for producing a heavy water gas hydrate substrate containing tritiated water, and the like.

### BACKGROUND ART

Since most of radioactive nuclides in contaminated water stored in the Fukushima No. 1 nuclear power plant of Tokyo Electric Power Co., Ltd. are removed by the ALPS treatment and the coprecipitation of iron compounds, the radioactive nuclide remaining at a concentration exceeding a concentration limit when released to a public water area is only tritium, and it is considered that the radioactive nuclide is present as tritiated water (HTO). Therefore, light water contaminated with tritiated water (hereinafter, also referred to as "contaminated water") is used as to-be-treated water, and a technique of separating tritiated water from the to-be-treated water, in other words, a technique of separating the tritiated water and the light water from the to-be-treated water in operational and concentration-efficient manners is required.

A tritium concentration in contaminated water generated in Fukushima is said to be 0.6 to 5 × 10⁶ Bq/L, and the contaminated water itself increases by 400 m³/day at maximum. Meanwhile, it is required to develop a tritium removal technique capable of removing at least the tritium concentration of the water contaminated with tritiated water to 6 × 10⁴ Bq/L or less which can be released into the environment (tritium concentration in seawater: 1 to 3 Bq/L) and having a treatment speed faster than 400 m³/day.

Since the specific activity of tritium (T) is 3.59 × 10¹⁴ Bq/g, the concentration of tritiated water in contaminated water is as extremely dilute as 1.11 to 9.29 × 10⁻⁸ g/L, and a technically difficult technique of removing about 99% or more of tritiated water from contaminated water having an extremely dilute tritium concentration is required.

Tritium is also known to be formed in nuclear reactors of nuclear power plants. Tritium is also formed when radiation falling on the earth from space comes into contact with nitrogen and oxygen in the air, and thus is contained in water vapor, rainwater, and sea water in the air, and is generally said to be contained at 1 Bq/L in Japan. Water may also be contaminated with tritium from radioactive mines and refineries for radioactive materials. Therefore, there is a demand for a technique of efficiently separating light water from tritiated water from not only contaminated water stored in Fukushima but also to-be-treated water containing tritiated water and light water as necessary.

For example, Patent Document 1 discloses a method for separating tritiated water from light water contaminated with tritiated water, wherein heavy water is added to a mixed liquid containing tritiated water and light water, gas hydrate containing tritiated water and heavy water in a crystal structure is formed under a condition for forming gas hydrate of heavy water and/or tritiated water and under a condition for maintaining a liquid state of most of the light water, and the gas hydrate is removed from the light water.

### PRIOR ART DOCUMENT

### PATENT DOCUMENT

Patent Document 1: WO 2016/002856

### SUMMARY OF THE INVENTION

### PROBLEMS TO BE SOLVED BY THE INVENTION

A main object of the present invention is to provide a technique of more efficiently treating to-be-treated water containing tritiated water and light water from the to-be-treated water containing tritiated water and light water even when a tritium concentration in the to-be-treated water is low.

### SOLUTIONS TO THE PROBLEMS

The present inventor has intensively studied a method for treating to-be-treated water containing tritiated water and light water or a method for treating to-be-treated water containing light water contaminated with tritiated water, and has found that light water gas hydrate, heavy water gas hydrate, and tritiated water gas hydrate form a complete solid solution in which they are mixed at an arbitrary ratio. The present inventor has found that a temperature at which they are converted to gas hydrate continuously varies depending on a composition ratio, and as a result, the present inventor has found that by providing a temperature difference in to-be-treated water containing a heavy water gas hydrate substrate, tritiated water, and light water based on a heavy water gas hydrate crystallization temperature zone and its vicinity, the to-be-treated water containing light water contaminated with tritiated water (hereinafter, also referred to as "water contaminated with tritiated water" or "contaminated water") can be more efficiently treated, and suitably, the tritiated water can be more easily and efficiently separated from water contaminated with tritiated water, and the light water with reduced tritiated water can be produced. That is, the present invention is as follows.

The present invention can provide a method for treating to-be-treated water containing tritiated water and light water, or a method for treating to-be-treated water containing light water contaminated with tritiated water, the method including providing a temperature difference in a heavy water gas hydrate substrate which may contain tritiated water, and to-be-treated water containing tritiated water and light water in the presence of a guest molecular gas based on a heavy water gas hydrate crystallization temperature zone and its vicinity under a pressure condition where heavy water gas hydrate or tritiated water gas hydrate can be crystallized.

The present invention can provide a method for producing a heavy water gas hydrate substrate containing tritiated water, the method including providing a temperature difference in a heavy water gas hydrate substrate which may contain tritiated water, and to-be-treated water containing tritiated water and light water in the presence of a guest molecular gas based on a heavy water gas hydrate crystallization temperature zone and its vicinity under a pressure condition where heavy water gas hydrate or tritiated water gas hydrate can be crystallized, to take tritiated water in the to-be-treated water into the heavy water gas hydrate substrate, thereby forming the heavy water gas hydrate substrate containing tritiated water.

Providing the temperature difference may mean providing a temperature difference between an upper temperature and a lower temperature of the to-be-treated water, or vibrating a temperature of the to-be-treated water with time.

The temperature difference is a temperature difference between a first temperature of the to-be-treated water and a second temperature lower than the first temperature in a reaction system. The temperature difference may be 2.0 to 8.0°C and/or the second temperature may be 8.0 to 21.0°C.

By providing the temperature difference, tritiated water in the to-be-treated water may be taken in the heavy water gas hydrate substrate to form the heavy water gas hydrate substrate containing tritiated water having a higher tritium concentration than that of the heavy water gas hydrate substrate, thereby separating the tritiated water from the to-be-treated water containing tritiated water and light water.

The method may further include bringing the to-be-treated water containing tritiated water and light water into circulation contact with the heavy water gas hydrate substrate in the presence of the guest molecular gas.

Furthermore, the tritiated water in the to-be-treated water may be taken in a formed heavy water gas hydrate substrate containing tritiated water to form the heavy water gas hydrate substrate containing tritiated water having a higher concentration than that of the heavy water gas hydrate substrate.

### EFFECTS OF THE INVENTION

The present invention can provide a technique of efficiently treating to-be-treated water containing tritiated water and light water from to-be-treated water containing tritiated water and light water even when a tritium concentration in the to-be-treated water is low. Note that the effects of the present invention are not necessarily limited to the effects described herein, and may be any of the effects described in the present specification.

### BRIEF DESCRIPTION OF THE DRAWINGS

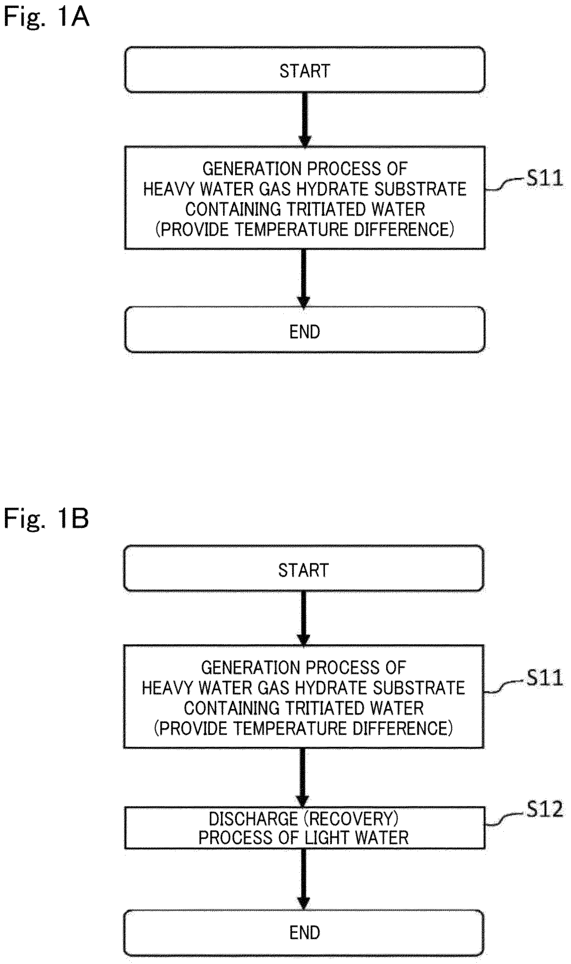

Fig. 1A is an example of a flowchart showing a process of forming or a method for forming a heavy water gas hydrate substrate containing tritiated water using the heavy water gas hydrate substrate containing tritiated water in the present embodiment. Fig. 1B is an example of a flowchart showing a method for separating tritiated water from contaminated water using a heavy water gas hydrate substrate containing tritiated water in the present embodiment.

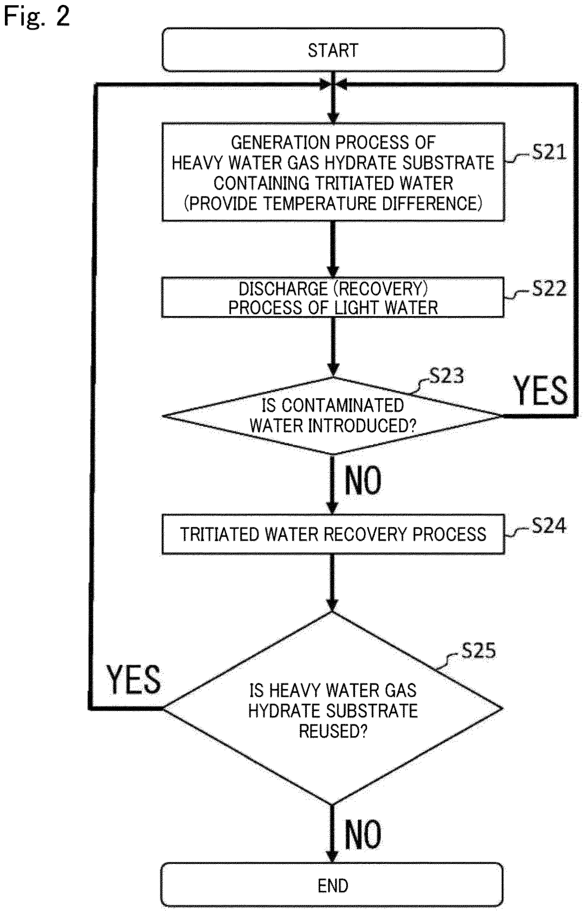

Fig. 2 is an example of a flowchart showing a method for separating tritiated water from repeatedly contaminated water and/or a method for separating tritiated water from contaminated water due to reuse of a heavy water gas hydrate substrate in the present embodiment.

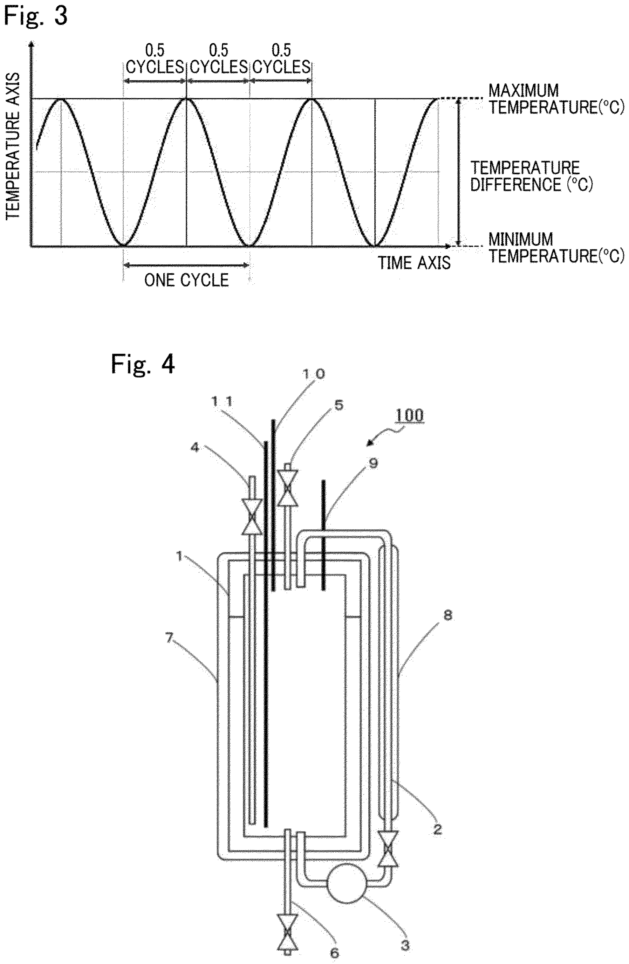

Fig. 3 is a diagram showing an example showing that the temperature of contaminated water is vibrated with time in the present embodiment.
Fig. 4 is a schematic view showing an example of a gas hydrate production device capable of forming heavy water gas hydrate containing tritiated water and/or separating tritiated water from contaminated water in the present embodiment.

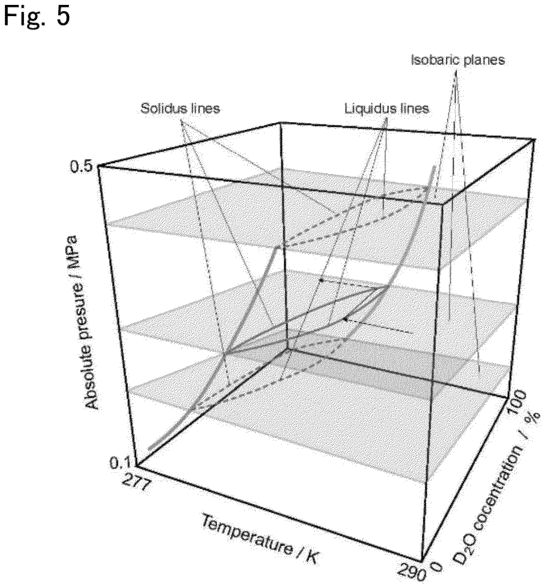

Fig. 5 is a schematic diagram of the phase diagram of an HFC-134a+D₂O+H₂O system using a pressure, a temperature, and a D₂O concentration axis. Arrowed lines indicate typical cooling processes for gas hydrate crystallization. Solidus lines, Liquidus Lines, Isobaric planes, Absolute pressure/MPa, Temperature/K, D₂O concentration/%.

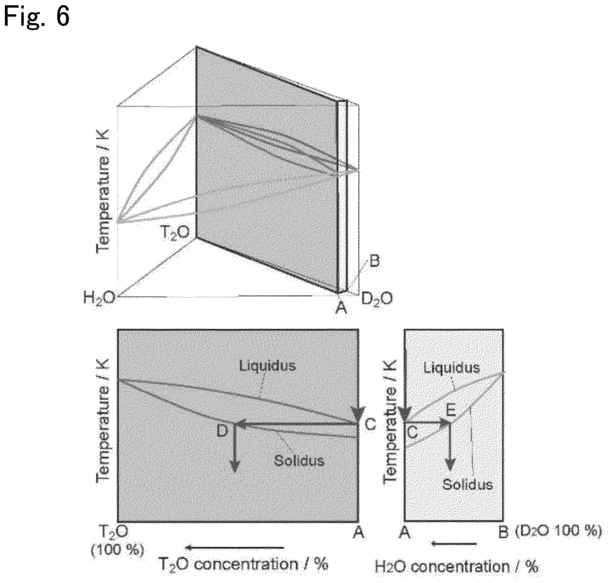

Fig. 6 (upper) shows a schematic phase diagram of a system including the end components of T₂O, D₂O, and H₂O under a specific constant pressure condition. Fig. 6 (lower left) shows a cross-sectional view of a phase diagram including the end component of T₂O and the composition of water (A) to be treated. Fig. 6 (lower right) shows a cross-sectional view of a phase diagram including the end component of the composition of water (A) to be treated and a 0% point of H₂O (B). Solidus, Liquidus, Temperature/K, T₂O concentration/%, H₂O concentration/%.

### DETAILED DESCRIPTION

Hereinafter, suitable embodiments for carrying out the present invention will be described. Note that the embodiments described below are examples of representative embodiments of the present invention, and the scope of the present invention is not narrowly interpreted by these embodiments. In the present specification, a percentage is expressed by mass unless otherwise specified. The upper limit value (or less) and lower limit value (or more) of each numerical range (to) in the present specification can be arbitrarily combined as desired.

### 1. Method for treating to-be-treated water containing tritiated water and light water or method for treating to-be-treated water containing light water contaminated with tritiated water, according to the present embodiment

The present embodiment can provide a method for treating to-be-treated water containing tritiated water and light water, a method for treating to-be-treated water containing light water contaminated with tritiated water, or a method for separating tritiated water from to-be-treated water containing tritiated water and light water, the method including providing a temperature difference in a heavy water gas hydrate substrate which may contain tritiated water, and to-be-treated water containing tritiated water and light water in the presence of a guest molecular gas based on a heavy water gas hydrate crystallization temperature zone and its vicinity under a pressure condition where heavy water gas hydrate or tritiated water gas hydrate can be crystallized (hereinafter, also referred to as "providing a temperature difference in the to-be-treated water") (see, for example, Figs. 1 and 2).

As a result, a reaction system in which the tritiated water in the to-be-treated water is taken in the heavy water gas hydrate substrate (hereinafter, also referred to as "reaction system") can be performed, and by separating the heavy water gas hydrate substrate containing the tritiated water to be taken in from the to-be-treated water or separating a liquid phase (liquid) from the reaction system, to-be-treated water or light water in which tritiated water contamination is reduced can be obtained.

Furthermore, by performing the liquid circulation of the liquid phase of the to-be-treated water, in which the liquid phase (liquid) of the to-be-treated water is output from the reaction system (for example, a reaction pressure vessel or the like), circulated using a flow path (piping or the like) including a circulation pump, and input to the reaction system, the tritiated water in the to-be-treated water can be brought into contact with the heavy water gas hydrate substrate (solid phase (slurry or the like) of the to-be-treated water) present in the reaction system each time the tritiated water passes through the reaction system (hereinafter, also referred to as "circulation contact"). By bringing the liquid phase of the to-be-treated water into circulation contact with the solid phase of the to-be-treated water, the tritiated water in the to-be-treated water can be efficiently taken in the heavy water gas hydrate substrate, and by adjusting the temperature of the liquid phase of the to-be-treated water to be circulated to a predetermined temperature, the reaction temperature of the to-be-treated water containing the heavy water gas hydrate substrate, tritiated water, and light water in the reaction system can also be controlled to a predetermined temperature.

Furthermore, the tritiated water can also be recovered from the heavy water gas hydrate substrate containing the tritiated water separated from the to-be-treated water, and the heavy water gas hydrate substrate after the recovery of the tritiated water can also be reused for the treatment of the to-be-treated water containing tritiated water and light water.

In the present embodiment, "-ing" such as "providing a temperature difference in to-be-treated water" may be "process" or "step", "process" may be "-ing" or "step", or "step" may be "-ing" or "process". In the present embodiment, a "mechanism" such as a "temperature adjustment mechanism" may be a device or a unit, the "device" may be a mechanism or a unit, and the "unit" may be a unit or a device provided in a mechanism, a device, or a system or the like.

In the present embodiment, more suitably, as a process simultaneously with "providing a temperature difference in the to-be-treated water", or as another process or a previous process, forming a heavy water gas hydrate substrate and/or mixing the heavy water gas hydrate substrate and contaminated water to form the to-be-treated water containing the heavy water gas hydrate substrate, tritiated water, and light water may be further included, but the present invention is not particularly limited to one or two or more processes selected from them.

In the present embodiment, as the process simultaneously with "providing a temperature difference in to-be-treated water", or as another process or a subsequent process, recovering the heavy water gas hydrate substrate containing tritiated water, and/or recovering tritiated water or treated water, and/or recovering light water or to-be-treated water obtained by separating or removing tritiated water from contaminated water may be further included, but the present invention is not particularly limited to one or two or more processes selected from them.

The method for treating to-be-treated water containing light water contaminated with tritiated water according to the present embodiment can also be used as a method for separating tritiated water, and a method for removing tritiated water from water contaminated with tritiated water, and the like, and can also be applied to a method for separating light water, a method for producing light water for reducing tritium to a regulated value or less, or a method for decontaminating light water.

The contaminated water used in the present embodiment refers to a liquid containing at least tritiated water (suitably, light water), and more specifically includes light water containing tritiated water, and to-be-treated water containing tritiated water, and the like, but is not limited thereto. The "light water from which tritiated water has been removed" in the present embodiment refers to light water in which a tritium concentration in contaminated water is at least reduced after a treatment, and is more preferably light water having a tritium concentration which is equal to or less than a tritium concentration reference value (10,000 becquerels per liter) contained in drinking water of the World Health Organization (WHO).

In the present embodiment, providing the temperature difference suitably means providing a temperature difference due to a spatial temperature difference and/or a temporal variation, and the temperature difference is more suitably a temperature difference between a first temperature and a second temperature. Here, the "first temperature" refers to a temperature higher than the "second temperature", and the "second temperature" refers to a temperature lower than the "first temperature".

As a more suitable aspect of the present embodiment, it is suitable to provide a temperature difference between the upper temperature (first temperature) and lower temperature (second temperature) of the to-be-treated water, or to vibrate the temperature of the to-be-treated water with time. At this time, it is suitable to provide a temperature difference between a maximum temperature (first temperature) and a minimum temperature (second temperature).

In the present embodiment, the temperature difference is suitably 2.0 to 8.0°C and/or the second temperature varies depending on the gas type of the guest molecular gas, and thus it is suitable to appropriately set the temperature difference. However, the second temperature is suitably 8.0 to 12.6°C when the guest molecular gas is HFC-134a, and the second temperature is suitably 8.0 to 21.0°C when the guest molecular gas is HFC-32. In consideration of these, the second temperature is suitably 8.0 to 21.0°C.

Furthermore, the method suitably includes bringing the to-be-treated water containing tritiated water and light water into circulation contact with the heavy water gas hydrate substrate in the presence of the guest molecular gas.

The present embodiment will be described in detail below, but the present invention is not limited thereto.

### <1-1. To-be-treated water containing heavy water gas hydrate substrate, tritiated water, and light water used in present embodiment>

The to-be-treated water used in the present embodiment is suitably to-be-treated water containing a heavy water gas hydrate substrate, tritiated water, and light water. By setting the inside of the reaction system in which the to-be-treated water and the guest molecular gas are present under a specific reaction condition, the heavy water gas hydrate substrate preferentially takes in tritiated water from the to-be-treated water containing tritiated water and light water, to form the heavy water gas hydrate substrate containing tritiated water. Furthermore, by maintaining the inside of the reaction system in which the formed gas hydrate substrate containing tritiated water, the to-be-treated water containing tritiated water and light water, and the guest molecular gas is present under a specific reaction condition, tritiated water is preferentially taken in from the to-be-treated water, and thus the heavy water gas hydrate substrate containing tritiated water having a higher concentration can be formed. Furthermore, in the present embodiment, even when new contaminated water is further introduced into to-be-treated water in the reaction system, the heavy water gas hydrate substrate containing tritiated water in the to-be-treated water can further take in tritiated water from the to-be-treated water. As a result, even when contaminated water introduced continuously or intermittently is added to to-be-treated water, there is an advantage that tritiated water can be more easily and efficiently separated continuously from the to-be-treated water.

The contaminated water used in the present embodiment suitably contains tritiated water, and the origin of the tritiated water (for example, THO, TDO, T₂O) is not particularly limited. Normally, in the case of light water contaminated with low concentration tritiated water, an equilibrium reaction (H₂O + T₂O ⇔ 2THO) is shifted to a THO side, and almost all of the light water is THO.

The "to-be-treated water" used in the present embodiment may be contaminated water containing tritiated water generated in relation to a nuclear reactor (nuclear fission), and in relation to a radioactive mine and a smelter, and the like. The to-be-treated water or the contaminated water may contain radionuclides (for example, cesium and strontium and the like) other than tritiated water and heavy water, but from the viewpoint of efficient separation, it is suitable to use contaminated water obtained by removing and separating or reducing other radionuclides by a known method as a pretreatment process as the to-be-treated water.

The content (mass/% by mass) of the heavy water gas hydrate substrate and/or the heavy water gas hydrate substrate containing tritiated water in the to-be-treated water in the reaction system (suitably in the reaction pressure vessel) is not particularly limited, but is suitably 20 to 80%, more suitably 25 to 75%, and still more suitably 30 to 70% in the to-be-treated water. Since the to-be-treated water is usually supplied and discharged into the reaction system, the content of "the heavy water gas hydrate substrate and/or the heavy water gas hydrate substrate containing tritiated water" contained in the to-be-treated water in the reaction system when temporarily stopped is referred to herein as the "content (mass/% by mass) of the heavy water gas hydrate substrate and/or the heavy water gas hydrate substrate containing tritiated water in to-be-treated water in the reaction system (suitably in the reaction pressure vessel)".

The content (mass/% by mass) of light water in the to-be-treated water in the reaction system (suitably in the reaction pressure vessel) is not particularly limited, but is suitably 20 to 80%, more suitably 25 to 75%, and still more suitably 30 to 70% in the to-be-treated water. Since the to-be-treated water is usually supplied and discharged into the reaction system, the content of "light water" contained in the to-be-treated water in the reaction system when temporarily stopped is referred to herein as the content (mass/% by mass) of light water in the to-be-treated water in the reaction system (suitably in the reaction pressure vessel).

The mass of the to-be-treated water containing the heavy water gas hydrate substrate and light water in the reaction system can be 100%.

A tritium concentration in the to-be-treated water is not particularly limited. According to the present embodiment, it is possible to efficiently separate tritiated water regardless of whether the tritium concentration in the to-be-treated water is high or low.

The suitable lower limit thereof is preferably 100 Bq/L or more, more preferably 140 Bq/L or more, still more preferably 200 Bq/L or more, yet still more preferably 300 Bq/L or more, further preferably 400 Bq/L or more, further more preferably 500 Bq/L or more, further still more preferably 0.001 × 10⁶ Bq/L or more, further yet still more preferably 0.01 × 10⁶ Bq/L or more, further yet still more preferably 0.05 × 10⁶ Bq/L or more, and further yet still more preferably 0.1 × 10⁶ Bq/L or more. The suitable upper limit thereof can be optionally set without particular limitation, and is preferably 1000 × 10⁶ Bq/L or less, more preferably 50 × 10⁶ Bq/L or less, still more preferably 10 × 10⁶ Bq/L or less, and yet still more preferably 5 × 10⁶ Bq/L or less.

In the present embodiment, the tritium concentration after the removal treatment can be suitably set to 100 to 1000 Bq/L, and more suitably 140 to 500 Bq/L.

According to the present embodiment, there is an advantage that tritiated water can be more easily and efficiently separated from to-be-treated water even when the tritium concentration in the to-be-treated water is as very low as 0.05 × 10⁶ Bq/L to 5 × 10⁶ Bq/L. At the present time, a restriction value when the to-be-treated water is released into a public water area in the Fukushima No. 1 nuclear power plant is 1500 Bq/L or less, and the restriction value differs depending on each facility or each country. However, in the case of the present embodiment, for example, the tritium concentration of the treated water (suitably light water) can be set to 1000, 700, 500, or 200 Bq/L or less, and the lower limit value can also be set to 1.5 or 1.4 × 10³ Bq/L. Therefore, it is also possible to produce or provide light water having a tritium concentration which is equal to or less than a tritium regulation value defined by the WHO or the like. The tritium concentration can be measured by a liquid scintillation method.

In the present embodiment, even when salts such as sodium chloride are contained in the to-be-treated water, the to-be-treated water can be treated, and the to-be-treated water may be seawater contaminated with tritiated water, brackish water, or light water containing them. The concentration of the salts such as sodium chloride is not particularly limited, but may be about the salt concentration of seawater (about 3.5% by mass), and in the present embodiment, the salts such as sodium chloride may be contained up to about 10% by mass in the to-be-treated water when the tritiated water and the gas hydrate substrate are brought into contact with each other. The salts such as sodium chloride can be removed by further performing a filter treatment with a reverse osmosis membrane or activated carbon or the like.

The to-be-treated water is preferably subjected to a filter treatment as a pretreatment in order to remove impurities and organic substances contained in the to-be-treated water. Accordingly, a gas hydrate method can be satisfactorily performed. The to-be-treated water after contact can also be subjected to a filter treatment as a posttreatment. The filter treatment is not particularly limited, and examples thereof include membrane treatments such as an activated carbon treatment, a microfiltration membrane (MF membrane) treatment, a limiting filtration membrane (UF) treatment, a nanofiltration membrane (NF) treatment, and a reverse osmosis membrane (RO membrane) treatment, and these may be used alone or in combination of two or more thereof.

### <1-1 -1. Contaminated water (raw water)>

The contaminated water or raw water used for the to-be-treated water is not particularly limited as long as it is light water contaminated with tritiated water. The contaminated water may be light water containing tritiated water at a very low concentration as stored in Fukushima as described above, or may be tritiated water formed in a nuclear reactor of a nuclear power plant as described above or light water contaminated with tritiated water in nature (for example, a radioactive mine). In order to efficiently separate tritiated water from contaminated water, it is desirable that contaminated water is continuously or intermittently introduced or supplied to a reaction formation system (for example, specifically, a reaction pressure vessel or the like) for forming or producing a heavy water gas hydrate substrate containing tritiated water.

A tritium concentration in the contaminated water is not particularly limited, but for example, contaminated water having a very dilute concentration as generated from the accident at the nuclear power plant of Fukushima up to the present date may be used as an object to be separated in the present embodiment, or the contaminated water (raw water) and a heavy water gas hydrate substrate or a heavy water gas hydrate substrate containing tritiated water are mixed to prepare to-be-treated water having a predetermined tritium concentration, and the prepared to-be-treated water may be used in the present embodiment. To-be-treated water containing a heavy water gas hydrate substrate containing tritiated water obtained by mixing to-be-treated water after a separation treatment and contaminated water may be used.

### <1-1-2. Heavy water gas hydrate substrate>

The origin of the heavy water gas hydrate substrate used in the present embodiment is not particularly limited.

In the present embodiment, the "heavy water gas hydrate substrate" used in the present embodiment means a heavy water gas hydrate substrate which may contain tritiated water unless otherwise specified, and more specifically means that a heavy water gas hydrate substrate which does not contain tritiated water (also referred to as tritiated water-free heavy water gas hydrate substrate) and a heavy water gas hydrate substrate containing tritiated water are contained.

Examples of the heavy water gas hydrate substrate used in the present embodiment include, but are not limited to, a heavy water gas hydrate substrate formed of heavy water or light water containing heavy water; a heavy water gas hydrate substrate formed from a mixed liquid containing contaminated water and heavy water; and a heavy water gas hydrate substrate for reuse after tritiated water recovery, and these may be used alone or in combination of two or more thereof.

By using the heavy water gas hydrate substrate, tritiated water can be easily and efficiently separated from to-be-treated water containing tritiated water and light water based on the heavy water gas hydrate substrate. When contaminated water is continuously or intermittently introduced into the reaction system, even if a new heavy water gas hydrate substrate is not added from another process, a heavy water gas hydrate substrate containing tritiated water can be formed while taking in tritiated water and increasing the concentration of tritiated water based on the heavy water gas hydrate substrate present in the reaction system, and tritiated water can be removed from the contaminated water. As described above, the present embodiment has advantages of good work efficiency such as easy workability, reduction in work man-hours, and reduction in work time.

### <1-1-2-1. Method for forming or producing heavy water gas hydrate substrate>

The heavy water gas hydrate substrate as a raw material used in the present embodiment can be formed, generated, or produced by a known heavy water gas hydrate forming method or producing method. The process of forming the heavy water gas hydrate substrate can be included or provided as a previous process or a pretreatment process of the present embodiment, whereby tritiated water can be easily and efficiently separated from to-be-treated water.

As a more suitable process of forming a heavy water gas hydrate substrate, a heavy water gas hydrate substrate is suitably formed or crystallized from heavy water or light water containing heavy water in the presence of a guest molecular gas under a heavy water gas hydrate forming condition. The light water containing heavy water may be any of a mixed liquid containing heavy water, contaminated water to which heavy water is added, or to-be-treated water containing heavy water, and is not particularly limited as long as the heavy water is contained in the liquid. Tritiated water can be efficiently separated from contaminated water based on the obtained heavy water gas hydrate substrate.

The suitable aspect of the process of forming the heavy water gas hydrate substrate includes forming a heavy water gas hydrate substrate from heavy water or a mixed liquid containing heavy water and light water in the presence of a molecular gas under a condition where heavy water gas hydrate can be crystallized in a reaction system (for example, in a reaction pressure vessel) used for separating tritiated water from the to-be-treated water.

More specific examples of thereof include externally introducing a mixed liquid containing heavy water into a reaction system (for example, a reaction pressure vessel); adjusting the temperature of the mixed liquid to a temperature at which heavy water gas hydrate can be formed; stirring the mixed liquid present in the reaction system and substantially uniformly filling the mixed liquid in the reaction system (for example, in a pressure vessel); crystallizing a heavy water gas hydrate substrate under a reaction condition where a heavy water gas hydrate substrate can be crystallized (suitably, under temperature and pressure conditions); discharging and removing a liquid phase (heavy water or the like) in a reaction pressure vessel after crystallization: and recovering or leaving a heavy water gas hydrate substrate capable of taking in tritiated water in the reaction system by discharging the liquid phase.

In the reaction system (for example, in the reaction pressure vessel), the formed heavy water gas hydrate substrate is suitably filled at a predetermined relative density. When the volume in the reaction system (suitably in the reaction pressure vessel) is taken as 100%, the relative density of the formed heavy water gas hydrate substrate is not particularly limited, but is suitably 40% or more, more suitably 45% or more, and still more suitably 50% or more. It is suitable that the heavy water gas hydrate substrate is sherbet-like, and is crystallized so as to be densely and substantially uniformly disposed in the reaction pressure vessel so as not to have a structure in which voids having a large pore diameter are continuous in the long axis direction of the vessel.

The molecular gas used for the gas hydrate formation of heavy water is not particularly limited, and can be appropriately adopted from the guest molecular gas described later. Among them, one kind or two or more kinds selected from CH₂F₂ (HFC-32), CH₂FCF₃ (HFC-134a), CF₃CFCH₂ (HFO-1234yf), C₃H₈ (propane), and CO₂ (carbon dioxide) are suitable, chlorofluorocarbon is more suitable, and CH₂FCF₃ (HFC-134a) is still more suitable.

A temperature for the gas hydrate formation of heavy water is not particularly limited, but is suitably in a pressure range of a pressure higher than a pressure at which heavy water is converted into gas hydrate and in a temperature range up to a low temperature (3.8°C) at which heavy water does not turn into ice.

A pressure for the gas hydrate formation of the heavy water is not particularly limited, but a pressure region from the pressure for the gas hydrate formation of the heavy water to a high pressure of 0.95 MPa is suitable. Note that the pressure in the present specification indicates not a gauge pressure indicating a differential pressure from the atmospheric pressure but an absolute pressure unless otherwise specified.

The mixed liquid containing heavy water or the light water containing heavy water used for forming the heavy water gas hydrate substrate may contain light water or tritiated water in addition to heavy water as long as the effects of the present embodiment are not impaired.

A liquid that can be used together with heavy water when the heavy water gas hydrate substrate used in the present embodiment is formed or produced is not particularly limited, and for example, heavy water may be added to one or two or more liquids selected from ordinary light water such as tap water, groundwater, rainwater, or treated water, light water contaminated with tritiated water (contaminated water), and to-be-treated water used in the present embodiment, and the like to prepare the mixed liquid containing heavy water or the to-be-treated water.

The concentration of heavy water in the mixed liquid containing heavy water or the to-be-treated water is not particularly limited, and the concentration of heavy water is preferably about 10% by mass or more at which the melt decomposition of the light water gas hydrate does not become dominant. Furthermore, heavy water is preferably a main component in order to obtain a heavy water gas hydrate substrate which easily exhibits a tritium separation ability, and the concentration of heavy water is more preferably 50% by mass or more, still more preferably 60% by mass or more, yet still more preferably 70% by mass or more, further preferably 80% by mass or more, further more preferably 90% by mass or more, further still more preferably 95% by mass or more, and further yet still more preferably 99% by mass or more from the viewpoint of exhibiting the tritium separation ability. In terms of the production cost of heavy water, the concentration of heavy water in the mixed liquid containing heavy water or the to-be-treated water may be about 70 to 90% by mass. As the heavy water, a commercially available product or heavy water industrially produced by a known method for producing heavy water can be used, and by mixing heavy water with light water, a mixed liquid containing heavy water having a heavy water concentration adjusted can also be obtained.

### <1-2. Reaction condition used in present embodiment>

In the present embodiment, it is suitable to form gas hydrate using the to-be-treated water under a specific reaction condition, and as the specific reaction condition, "under a pressure condition where heavy water gas hydrate or tritiated water gas hydrate can be crystallized" is suitable. Furthermore, it is suitable to form gas hydrate using the to-be-treated water in the "presence of guest molecular gas" under the pressure condition. Furthermore, it is more suitable that the gas hydrate is formed by providing a temperature difference in the to-be-treated water.

As a more suitable aspect in the present embodiment, it is suitable to provide a temperature difference under a specific condition in the to-be-treated water under a guest molecular condition under a specific reaction condition, and by providing the temperature difference, a heavy water gas hydrate substrate which may contain tritiated water can be formed while taking in tritiated water from the to-be-treated water. This makes it possible to easily and efficiently separate tritiated water from the to-be-treated water.

### <1-2-1. Under pressure condition where heavy water gas hydrate or tritiated water gas hydrate can be crystallized>

The "pressure condition where heavy water gas hydrate or tritiated water gas hydrate can be crystallized" in the present embodiment is not particularly limited, but it is suitable to set a pressure at which heavy water gas hydrate or tritiated water gas hydrate can be crystallized.

The more suitable crystallizable pressure is suitably 0.01 to 0.5 MPa higher than the thermodynamic equilibrium pressure of crystallization, more suitably 0.01 to 0.3 MPa higher, and still more preferably 0.01 to 0.3 MPa higher.

The more suitable crystallizable temperature is suitably 10.0 to 21.0°C, more suitably 11.0 to 20.0°C, and still more suitably 11.0 to 18.0°C as an absolute value (°C).

In the present embodiment, "under a pressure condition where heavy water gas hydrate or tritiated water gas hydrate can be crystallized" and "pressure" are defined. This defined pressure is any pressure in a pressure range in which crystallization occurs and not a single pressure. Although the case where the pressure is constant is illustrated in the explanatory drawing, the pressure may fluctuate as long as it is within a pressure range where crystallization occurs. In the case where the pressure is constant, the composition of tritiated water, heavy water, and light water is expressed in two dimensions, and when the temperature and the pressure are added as independent variables, the phase diagram is expressed in a four-dimensional space. Although it is possible to mathematically express elements in a four-dimensional space, it is impossible to express the elements in a three-dimensional space or a plane projected in a two-dimensional space and visually grasp the elements. Therefore, by making the pressure constant, a phase diagram in a four-dimensional space is projected in a three-dimensional space for description.

Even if the pressure is fixed in a ternary system of tritiated water, heavy water, and light water, a boundary line between a liquid phase and (the liquid phase + a solid phase) is not a line but originally a curved surface, and this curved surface is represented by a term of a liquid phase surface. Similarly, the boundary line of the solid phase is represented by a term of a solid phase surface instead of a line. For this reason, in the present embodiment, "under a pressure condition where heavy water gas hydrate or tritiated water gas hydrate can be crystallized" and "pressure" are defined, but in the present embodiment, a liquid phase surface and a solid phase surface that are on an extension of the concept of a pressure used in the present embodiment can be included. In the present embodiment, when the pressure is changed, the pressure is an aggregate of coordinates satisfying a specific condition in a four-dimensional space, the liquidus is a liquid phase solid, and the solidus is a solid phase solid. In this manner, it is also possible to grasp components other than the pressure from the aggregate by using mathematical expressions.

A thermodynamic equilibrium condition where tritiated water gas hydrate is crystallized has not been determined so far. This is because the determination of the thermodynamic equilibrium condition requires a test using tritiated water with high purity, but tritium is a radioactive substance, and when the purity is high, it is difficult to shield radiation, and at the same time, it is extremely difficult to perform a safe and stable test because tritium itself is disintegrated and the concentration changes with time. Therefore, it is considered that the setting of the temperature and pressure at which the heavy water gas hydrate or the tritiated water gas hydrate can be crystallized and the thermodynamic equilibrium condition where the heavy water gas hydrate is crystallized exhibit the same tendency as that of the formation temperature of ice since the gas hydrate is gas taken in the ice. Therefore, by performing a test in advance in consideration of this, it is possible to set a pressure condition where the heavy water gas hydrate or the tritiated water gas hydrate can be crystallized, a temperature at which the heavy water gas hydrate or the tritiated water gas hydrate can be crystallized and its vicinity, and a thermodynamic equilibrium condition where the heavy water gas hydrate is crystallized. For example, for the melting point of ice, heavy water: 3.82°C (276.97 K) [Reference Document 1] and tritiated water: 4.48°C (277.63 K) [Reference Document 2] are set, and the temperature difference is 0.66 K. Therefore, in the case of hydrate, it is considered that tritiated water is about 0.5 K higher than heavy water. [Reference Document 1] Long, E. A.; Kemp, J.D., J. Am. Chem. Soc. 1936, 58 (10), 1829-1834. [Reference 2] Jones, W. M., J. Am. Chem. Soc. 1952, 74 (23), 6065-6066.

Some thermodynamic equilibrium conditions are known for heavy water gas hydrate, and when the guest molecular gas is HFC-134a, the pressure is 0.438 MPa at 13°C, 0.371 MPa at 12.3°C, and 0.316 MPa at 11.6°C. When compared with light water, the temperature is 2.9°C higher at the same pressure. In the case of HFC-32, the pressure is 0.680 MPa at 15.3°C and 0.718 MPa at 15.8°C. When compared with light water, the temperature is 1.9°C higher at the same pressure. The temperature difference may be displayed in Kelvin (K) which is an absolute temperature display.

A more suitable aspect of the present embodiment is performed "under a pressure condition where heavy water gas hydrate or tritiated water gas hydrate can be crystallized, and under a condition where a liquid state of light water is maintained". At this time, most of the light water may be in a condition capable of maintaining the liquid state. Regarding the "condition where most of light water can be maintained in a liquid state", a small amount of light water may be contained in the gas hydrate under an environment with a low tritium concentration, and thus, a condition where at least about 90% or more of light water is maintained in a liquid state is more suitable. For example, in the case of about 0.5 × 10⁶ Bq/L to 5 × 10⁶ Bq/L, light water of about 2% by mass at the maximum may be contained in the gas hydrate, and thus, in the "condition where most of light water is maintained in a liquid state" in this case, 98% or more of light water is maintained in a liquid state.

### <1-2-2. Guest molecular gas>

As "under presence of guest molecular gas" in the present embodiment, it is suitable that the guest molecular gas is present in the to-be-treated water, and as a more suitable state, it is suitable that the guest molecular gas is present in the atmosphere in the reaction system, and the guest molecular gas is saturated and dissolved or supersaturated in the to-be-treated water present in the reaction system.

Furthermore, examples of the process of allowing the guest molecular gas to be present in the to-be-treated water include introducing the guest molecular gas into a reaction system (for example, in a reaction pressure vessel) in which gas hydrate is formed and preparing the guest molecular gas so as to be present in the to-be-treated water by introducing the guest molecular gas into the reaction system. At this time, the pressure and the temperature may be controlled, or contact (for example, mixing and aeration and the like) between the guest molecular gas and the to-be-treated water may be controlled.

In order to reduce the number of gases other than the target guest molecules before starting the formation of the gas hydrate, it is suitable to remove gases contained in the vessel and the liquid before starting (for example, air, oxygen, and carbon dioxide gas and the like). Examples of the liquid to be subjected to gas removal include to-be-treated water and a mixed liquid containing heavy water, but are not particularly limited as long as it is a liquid to provide the formation of the gas hydrate, and it is desirable to perform gas removal as a pretreatment.

The gas removing means is not particularly limited, but a pressure reducing pump or the like is usually used. Thereafter, the guest molecules and a liquid (for example, heavy water, and to-be-treated water and the like) intended for forming gas hydrate are mixed. The mixing means is not particularly limited, but a gas bubbling method is usually used. After these treatments, the gas hydrate is formed.

The guest molecule used in the present embodiment is not particularly limited, and may be one that is generally used.

Examples thereof include fluorinated hydrocarbons such as CH₂F₂ (HFC-32), CH₂FCF₃ (HFC-134a), and CF₃CFCH₂ (HFO-1234yf); hydrocarbons such as CH₄, C₂H₄, C₂H₆, C₃H₆, C₃H₈, C₄H₁₀; rare gases such as Ar, Kr, and Xe; N₂, O₂, H₂S, CO₂ and the like, and mixed gases thereof, and these can be used alone or in combination of two or more thereof.

Among these gases, CH₂F₂ (HFC-32), CH₂FCF₃ (HFC-134a), CF₃CFCH₂ (HFO-1234yf), C₃H₈ (propane), and CO₂ (carbon dioxide) are preferable. Furthermore, from the viewpoint of easy handling, CH₂FCF₃ (HFC-134a), CH₂F₂ (difluoromethane: HFC-32), and propane are more preferable, and CH₂FCF₃ (HFC-134a) is still more preferable. These can be used singly or in combination of two or more kinds thereof.

### <1-2-3. Providing a temperature difference in the to-be-treated water based on a heavy water gas hydrate crystallization temperature zone and its vicinity>

The "heavy water gas hydrate crystallization temperature zone" in the present embodiment is a temperature range in which crystallization in a non-equilibrium state occurs in the case of a mixed phase of light water, tritiated water, and heavy water.

In the present embodiment, the method for determining the temperature range of the crystallization temperature zone can be obtained as follows.

In the determination of the thermodynamically equilibrium crystallization temperature of heavy water gas hydrate, a temperature at which crystallization has occurred is determined by slowly cooling from a temperature higher than the crystallization temperature roughly determined in a preliminary test at a constant rate with a temperature falling rate as a parameter. In the obtained relational expression between the temperature lowering rate and the crystallization temperature, a temperature when the temperature lowering rate obtained by extrapolation is 0 is generally defined as a thermodynamically equilibrium crystallization temperature. The pressure needs to be kept constant in this test. More precisely, the crystallized gas hydrate crystals are heated at a constant rate with a temperature rising rate as a parameter from a temperature lower than the crystallization temperature under a constant pressure, and a temperature at which the crystals are melted is obtained. In the obtained relational expression between the temperature raising rate and the melting temperature, a temperature when the temperature raising rate obtained by extrapolation is 0 is defined as a thermodynamically equilibrium melting temperature. It is confirmed that the above-described crystallization temperature matches the melting temperature with sufficient accuracy, and for the first time, a thermodynamically equilibrium crystallization temperature is obtained. Alternatively, there is a method in which the temperature is lowered stepwise, and a temperature at which crystallization occurs is taken as the crystallization temperature.

Thus, it is possible to obtain the thermodynamically equilibrium temperature at which the heavy water gas hydrate is crystallized. However, since the treatment in the present embodiment is performed under a thermodynamically non-equilibrium condition where a substance continuously flows in and out of the reaction pressure device and crystallization and melting reactions continuously occur, the thermodynamically equilibrium temperature is used as one criterion, but it is impossible to perform the treatment at the thermodynamically equilibrium temperature.

In practice, crystallization does not occur at the thermodynamic equilibrium temperature of heavy water gas hydrate, and when the temperature is slightly lower than this temperature, the starting point of crystal growth appears on the substrate, and crystal growth is started.

There are many uncertain factors on how low the temperature is to cause crystallization, and there is a range of -0.1 to 2°C due to the influence of the spatial inhomogeneity of the composition. Once the crystallization is started, crystallization continues even if the temperature is raised to the thermodynamic equilibrium temperature. Since the crystallization reaction of the gas hydrate itself is an exothermic reaction, a temperature rise occurs due to crystallization, and it is difficult to completely suppress the temperature rise, but crystallization continues to occur.

Therefore, the crystallization temperature at which the treatment is performed in the present embodiment is not a single temperature but in a crystallization temperature zone having a width of -0.1 to 2°C with respect to the thermodynamic equilibrium temperature.

The "heavy water gas hydrate crystallization temperature zone" can also be referred to as a "crystallization temperature zone of gas hydrates of heavy water, light water, and tritiated water at a treatment pressure", a "crystallization temperature zone of mixed water gas hydrate containing heavy water as a host component at a treatment pressure", or a "crystallization temperature zone of gas hydrate containing heavy water as a host component at a treatment pressure". As the concept of the "treatment pressure", the definition related to the "pressure" described in the above <1 -2- 1.> can be referred to.

The present inventor has considered that since the mixed gas hydrate of the light water and the heavy water is crystallized under the condition of a "temperature higher than a temperature at which the gas hydrate of only light water is crystallized", the treatment needs to be performed at a temperature equal to or higher than the temperature at which the gas hydrate of only the heavy water is crystallized. However, in reality, light water is slightly present even on the surface of the heavy water gas hydrate substrate, and thus crystallization does not occur unless the temperature is slightly lower than the temperature at which the gas hydrate of only heavy water is crystallized. Meanwhile, since tritiated water is also contained very slightly, it was considered that the temperature at which crystallization is started is slightly higher than the temperature at which gas hydrate of only heavy water is crystallized. Furthermore, the present inventor considered that since the concentration of light water is actually much higher than that of tritiated water, crystallization occurs at a temperature slightly lower than a temperature at which gas hydrate of only heavy water is crystallized. This is the "vicinity of a heavy water gas hydrate crystallization temperature zone" in the present invention.

The relationship among the "vicinity of a heavy water gas hydrate crystallization temperature zone", the "second temperature", and the "first temperature" in the present embodiment will be described. Under a thermodynamically equilibrium condition, crystallization is started at a liquidus temperature indicated by the intersection of a straight line indicating the composition of the to-be-treated water at the treatment pressure and a liquid phase surface, but under a non-equilibrium condition, crystallization is actually observed at a temperature -0.1 to 2°C higher than this temperature. Since there is a difference between the temperatures at which crystallization in the equilibrium state and the non-equilibrium state is observed as described above, the actual treatment temperature is set as the "vicinity of the crystallization temperature zone", and the "second temperature" is determined on the basis of this temperature. The composition of the crystallized gas hydrate is not the composition of the to-be-treated water (C of Fig. 6) but the composition (in Fig. 6, the tritium concentration corresponds to D, and the light water concentration corresponds to E) indicated by the intersection of the above-described liquidus temperature plane and the solid phase surface at the treatment temperature. The difference between this composition and the composition of the to-be-treated water corresponds to the amount of tritiated water taken in and the amount of light water removed by one crystallization. Therefore, if recrystallization is performed by repeating crystallization and melting, the tritiated water concentration in the crystal composition further increases, and the light water concentration in the crystal composition further decreases. In order to perform this recrystallization, it is necessary to melt the crystallized crystal, and the temperature at which this melting is performed is the "first temperature".

By providing a temperature difference in the to-be-treated water based on the heavy water gas hydrate crystallization temperature zone and its vicinity, it is possible to more easily and efficiently take tritiated water in the to-be-treated water into the heavy water gas hydrate substrate to form a heavy water gas hydrate substrate containing tritiated water having a higher tritium concentration than that of the heavy water gas hydrate substrate. As a result, it is possible to treat to-be-treated water containing light water contaminated with tritiated water, and for example, it is also possible to more easily and efficiently separate tritiated water from to-be-treated water containing tritiated water and light water.

"Providing a temperature difference in the to-be-treated water" is suitably providing a temperature difference in the to-be-treated water due to spatial variation and/or temporal variation, and as a more suitable aspect, is changing the temperature of the to-be-treated water in the reaction system and/or changing the temperature of the liquid phase (liquid) of the to-be-treated water which is input to and output from the reaction system and circulated in the reaction system, and as a still more suitable aspect, is a temperature difference between the temperature of the upper end of the pressure vessel of the to-be-treated water in the reaction system and the temperature of the lower end of the pressure vessel and/or a temperature difference between the maximum temperature and the minimum temperature of the temporal variation of the pressure vessel temperature. As a more suitable aspect, by indirectly changing the temperature of the heavy water gas hydrate substrate by changing the temperature of the liquid phase (liquid) of the to-be-treated water circulating in the reaction system, the taking in of tritiated water by the heavy water gas hydrate substrate can be more satisfactorily controlled.

As a more suitable aspect, it is suitable to change the temperature of the to-be-treated water containing the heavy water gas hydrate substrate which may contain tritiated water present in the reaction system, or change the temperature of the to-be-treated water containing contaminated to-be-treated water which is brought into circulation contact with the heavy water gas hydrate substrate which may contain tritiated water in the reaction system.

"Providing a temperature difference in to-be-treated water" in the present embodiment suitably means that the Z-axis direction (vertical direction) of the to-be-treated water is divided into at least two or more regions, and a temperature difference is spatially provided in the two or more regions (suitably, two upper and lower regions), or a temperature difference is temporally provided by vibrating the temperature of the to-be-treated water with time.

In the present embodiment, by "providing a temperature difference in to-be-treated water" for a certain period of time, tritiated water can be taken in a heavy water gas hydrate substrate which may contain tritiated water in the to-be-treated water (hereinafter, also referred to as "take-in process"). The take-in process can be performed at the same time as the vibration process, and these processes are performed at the same time, so that the tritiated water can be more easily and efficiently taken in the heavy water gas hydrate substrate which may contain tritiated water. The reaction conditions such as a pressure and a temperature in the take-in process at this time are suitably the same as those in the vibration process.

The certain period of time at this time is a total time of a treatment for providing a temperature difference in the to-be-treated water, and the certain period of time is not particularly limited, but can be set as needed depending on the volume in the reaction pressure vessel. As an example, the suitable upper limit value of the continuous operation time is suitably 0.5 hours or more, more suitably 0.75 hours or more, and still more preferably 1 hour or more from the viewpoint of work efficiency due to time reduction. The suitable lower limit value thereof is not particularly limited because tritiated water can be efficiently taken in even in continuous operation, and is suitably 2 to 3 months or less, 1 month or less, or 2 weeks or less from the viewpoint of device maintenance and the like. The lower limit value may be 1 week or less from the viewpoint of accelerating tritiated water recovery. In this case, a cylindrical shape having a height of 2 to 4 with respect to a diameter of 1 is suitable for the reaction system, but other shapes may be used. By providing the treatment time for a certain period of time, the tritiated water is taken in the heavy water gas hydrate substrate, and the tritiated water is separated or removed from the light water. After the certain period of time is ended, a certain period of time may be newly started.

The suitable aspect of "providing a temperature difference in the to-be-treated water" include circulating the to-be-treated water (liquid phase) containing tritiated water and light water and bringing the to-be-treated water (liquid phase) into contact with the heavy water gas hydrate substrate in the presence of the guest molecular gas. As a result, the tritiated water is taken in the heavy water gas hydrate substrate, and the tritiated water is separated or removed from the light water. In addition, when the to-be-treated water is circulated, the temperature of the to-be-treated water can also be adjusted more easily and efficiently. By inputting and outputting the to-be-treated water into and from the reaction system, the temperature of the to-be-treated water in the reaction system can be adjusted more easily and efficiently.

Furthermore, as the more suitable aspect of "providing a temperature difference in the to-be-treated water", the liquid phase (liquid) of the to-be-treated water containing tritiated water and light water is brought into circulation contact with a heavy water gas hydrate substrate (solid phase of to-be-treated water) which may contain tritiated water in the reaction system in the presence of the guest molecular gas, and it is also possible to provide a temperature difference in the to-be-treated water in the reaction system by adjusting the temperature of the liquid phase (liquid) of the to-be-treated water containing tritiated water and light water to be circulated. The liquid phase (liquid) of the to-be-treated water may contain the heavy water gas hydrate substrate as long as the heavy water gas hydrate substrate does not interfere with circulation.

By circulating the to-be-treated water while adjusting the temperature outside the reaction system using an external liquid circulation circuit (piping or the like) provided outside the reaction system for taking tritiated water in the to-be-treated water in the heavy water gas hydrate substrate, there is an advantage that the temperature in the reaction system can be more easily and efficiently controlled. Furthermore, since the contact frequency between the heavy water gas hydrate substrate and contaminated water is increased by the circulation contact, there is an advantage that tritiated water is more easily and efficiently taken in the heavy water gas hydrate substrate.

More suitably, the temperature of the to-be-treated water in the reaction system is vibrated with time by adjusting the temperature of the to-be-treated water in the reaction system while adjusting the temperature of the to-be-treated water to be circulated.

Furthermore, it is suitable to control the temperature of the to-be-treated water circulated using the external liquid circulation circuit or the like, and this makes it possible to more easily and efficiently provide a temperature difference in the to-be-treated water in the reaction system.

Regarding a temperature difference, a first temperature (upper end temperature of spatial variation, maximum temperature of temporal variation), and a second temperature (lower end temperature of spatial variation, minimum temperature of temporal variation) and the like used in the present embodiment, the temperature of the to-be-treated water changes depending on the guest molecular gas to be used, and correspondingly, it is desirable to appropriately adjust various temperatures as needed.

The temperature difference between the first temperature and the second temperature lower than the first temperature in the present embodiment is suitably 0.5 to 12.0°C, more suitably 1.0 to 10.0°C, and still more suitably 2.0 to 8.0°C. Furthermore, the second temperature is suitably 8.0 to 21.0°C.

The second temperature in the present embodiment is suitably ±3°C of the thermodynamic equilibrium crystallization temperature at the treatment pressure of the gas hydrate containing the guest molecular gas, more suitably ± 2°C of the melting point of the guest molecular gas, and still more suitably ±1°C of the melting point of the guest molecular gas.

For example, when HFC-134a is used as the guest molecular gas, the temperature difference between the first temperature and the second temperature is suitably 2.0 to 8.0°C and/or the second temperature is suitably 8.0 to 12.6°C.

The temperature control device used in the present embodiment is configured to control the current measured value (°C) to match the target set value (°C), and for example, it is suitable to include a heating and/or cooling device, a temperature sensor, and a temperature adjustment mechanism and the like. The temperature control device may be configured to perform feedback temperature control. As the operation control for the temperature control, known operation control may be used, and for example, ON/OFF operation control, P operation (proportional operation) control, and PID operation control are suitable.

### <1-2-3-1. Providing a temperature difference between the upper temperature and lower temperature of the to-be-treated water>

In the present embodiment, in "providing a temperature difference in two or more regions in the Z-axis direction (vertical) of the to-be-treated water", and more suitably, "providing a temperature difference between the upper temperature and lower temperature of the to-be-treated water", for example, it is suitable to provide a temperature difference between the upper temperature and lower temperature of the to-be-treated water in the to-be-treated water with respect to the Z-axis (vertical direction) direction. At this time, as the range of the temperature difference, the upper temperature (upper region) of the to-be-treated water is set to the upper end temperature (°C) (first temperature), the lower temperature (lower region) of the to-be-treated water is set to the lower end temperature (°C) (second temperature), and upper to-be-treated water and lower to-be-treated water having a temperature difference can be prepared. The object to be heated is not the heavy water gas hydrate substrate but the liquid to be treated. The boundary between the upper to-be-treated water and the lower to-be-treated water is not particularly limited, and the temperature continuously changes.

Here, in the present embodiment, a "region in which a liquid to be treated (the to-be-treated water) has a temperature exceeding a crystallization temperature zone is provided in a reaction pressure vessel", or a "temperature in a reaction vessel is vibrated between a temperature exceeding a crystalline temperature zone and a temperature encapsulated in the crystalline temperature zone". Among them, there may be a plurality of places in which the former "region in which a liquid to be treated (the to-be-treated water) has a temperature exceeding a crystallization temperature zone is provided in a reaction pressure vessel". The aspect ratio of the reaction pressure vessel may be increased, and the "region in which a liquid to be treated (the to-be-treated water) has a temperature exceeding a crystallization temperature zone", and the "region in which a liquid to be treated has a temperature encapsulated in the crystalline temperature zone" may be alternately stacked in the longitudinal direction. In this case, the reaction pressure vessel may be placed vertically or horizontally, but it is suitable that the liquid to be treated (the to-be-treated water) is pumped by a pump or the like so as to circulate in one direction from the viewpoint of tritiated water take-in efficiency. As "providing a temperature difference in two or more regions", it is not necessary to spatially form one stage, and "layers" such as high temperature, low temperature, high temperature, low temperature,..., high temperature, and low temperature may be spatially repeated. In this case, it is suitable to provide a mechanism for preventing backflow, and in this case, it is desirable to forcibly circulate the liquid to be treated in one direction by a pump or the like. At this time, it is desirable to circulate the liquid to be treated so that the layer can be maintained, and for example, it is desirable to provide a circulation inlet/outlet port (area ratio: for example, 1/50 or less) smaller than the planar portion of the layer in the XY axis direction (horizontal direction) and circulate the liquid to be treated in one direction and/or adjust the flow rate of circulation so that the layer can be maintained (for example, low speed adjustment of a pump).

In the present embodiment, more suitably, it is suitable to perform temperature control so that the upper temperature of the to-be-treated water becomes higher than the lower temperature and/or the lower temperature of the to-be-treated water becomes lower than the upper temperature. In consideration of the occurrence of a convection phenomenon, it is more suitable to perform temperature control so that the upper temperature of the to-be-treated water becomes higher than the lower temperature. It is suitable to perform the treatment for a certain period of time in the states of the upper to-be-treated water and the lower to-be-treated water having a temperature difference. At this time, the pressure condition is suitably the same as or substantially the same as that when the temperature difference is provided. The certain period of time is not particularly limited, but the temperature control may be performed in all the treatment times, may be performed in a part of treatment times, or may be performed intermittently. By providing the treatment time for a certain period of time, the tritiated water is taken in the heavy water gas hydrate substrate, and the tritiated water is separated or removed from the light water.

The temperature difference in providing the temperature difference between the upper temperature and the lower temperature of the to-be-treated water is suitably 0.5 to 12.0°C, more suitably 1.0 to 10.0°C, and still more suitably 2.0 to 8.0°C. The lower end temperature in the present embodiment is suitably ±3°C of the thermodynamic equilibrium crystallization temperature at the treatment pressure of the gas hydrate containing the guest molecular gas, more suitably ±2°C of the melting point of the guest molecular gas, and still more suitably ±1°C of the melting point of the guest molecular gas.

When temperature sensors are provided in the reaction system (suitably in the reaction pressure vessel) to measure the upper end temperature and the lower end temperature of the to-be-treated water, it is suitable to provide a plurality of temperature sensors so that at least the upper end temperature and the lower end temperature can be measured, respectively. The temperature sensor provided for measuring the upper end temperature is suitably provided at a place near the upper surface of the liquid in the reaction system (for example, in the reaction pressure vessel) and at a place where the to-be-treated water is present (lower than the liquid level). The temperature sensor (contact type or non-contact type thermometer) used for measuring the liquid lower end temperature is suitably provided at a place near the bottom surface in the reaction system (for example, in the reaction pressure vessel) and at a place where to-be-treated water is present (near the bottom surface or the like).

The position of a portion (or installation location) where the to-be-treated water in the reaction system (in the reaction pressure vessel) is measured by the contact type or non-contact type thermometer is not particularly limited, but is preferably 1/4 to 1/50 from the upper surface and/or the bottom surface, more preferably 1/6 to 1/30 from the upper surface and/or the bottom surface, and still more preferably 1/10 to 1/30 from the upper surface and/or the bottom surface when the height (distance from the upper surface to the bottom surface) in the Z-axis direction inside the reaction system (reaction pressure) is 1. For example, "1/50 from the upper surface" is a position closer to the upper surface than "1/4 from the upper surface".

As a device or means for providing the temperature difference, it is suitable to provide one or a plurality of temperature adjustment mechanisms (suitably, warm refrigerant temperature control mechanism) in the upper part and lower part of the reaction system so that temperature control can be independently performed. It is suitable to provide a predetermined temperature difference between the upper temperature and the lower temperature by controlling the upper temperature of the to-be-treated water while controlling the lower temperature of the to-be-treated water with the temperature adjustment mechanisms respectively provided in the upper part and the lower part in the reaction system. By providing the predetermined temperature difference, the tritiated water is taken in the heavy water gas hydrate substrate, and the tritiated water is separated or removed from the light water.

When a predetermined temperature difference is provided between the temperatures of the to-be-treated water in two or more regions in the reaction system (the upper temperature of the to-be-treated water and the lower temperature of the to-be-treated water), and then a certain period of time elapses, the heavy water gas hydrate substrate which may contain tritiated water more efficiently takes in tritiated water from contaminated water, and the heavy water gas hydrate substrate containing tritiated water can be formed.

Mixing by natural convection caused by the temperature difference between the upper temperature and the lower temperature is suitable, but mixing operation by the circulation of the to-be-treated water from the outside of the reaction system, or mixing operation by a convection device (for example, a stirring type such as a stirring blade, a fluid injection type such as liquid injection, and the like) in the reaction system, and the like may be performed within a range in which the temperature difference is maintained.

In the case of the temperature difference between the upper part and the lower part of the to-be-treated water in the reaction system, the predetermined temperature difference is suitably 0.5 to 12.0°C, more suitably 1.0 to 10.0°C, and still more preferably 2.0 to 8.0°C. The temperature of the lower part (lower end temperature) in the reaction system or the lower end temperature in the present embodiment is suitably ±3°C of the thermodynamic equilibrium crystallization temperature at the treatment pressure of the gas hydrate containing the guest molecular gas, more suitably ±2°C of the melting point of the guest molecular gas, and still more suitably ±1°C of the melting point of the guest molecular gas. The lower end temperature when the HFC-134a is used as the guest molecular gas is 5 to 14°C, the lower end temperature when the HFC-32 is used is 7 to 21°C, and the lower end temperature when CO₂ is used is 2 to 12°C.

A certain period of time (total treatment time) when the temperature difference between the upper part and the lower part of the to-be-treated water is provided in the reaction system is not particularly limited, but the temperature control may be performed in the entire treatment time, may be performed in a part of the treatment time, or may be performed intermittently.

By providing the treatment time for a certain period of time, the tritiated water is taken in the heavy water gas hydrate substrate, and the tritiated water is separated or removed from the light water. After the certain period of time is ended, a certain period of time may be newly started.

When the temperature difference between the upper part and the lower part in the reaction system is provided, the specific pressure condition in the reaction system is suitably a thermodynamic equilibrium condition where heavy water gas hydrate is crystallized and/or its vicinity.

In the <1-2-3-1. Providing the temperature difference between the upper temperature and lower temperature of the to-be-treated water>, the following description such as <1-2-3-2. Vibration of the temperature of the to-be-treated water over time> applies to the present embodiment, and the description can be appropriately adopted. For example, the "maximum temperature" may be set as the "first temperature", the "minimum temperature" may be set as the "second temperature", and the temporal variation may be appropriately applied to the spatial variation of the <1-2-3-1. Providing the temperature difference between the upper temperature and lower temperature of the to-be-treated water>.

### <1-2-3-2. Vibration of temperature of the to-be-treated water over time>

The vibration of the temperature of the to-be-treated water over time in the present embodiment includes, for example, raising or lowering the temperature of the to-be-treated water over time. By the vibration over time, tritiated water is more easily and efficiently taken in a heavy water gas hydrate substrate which may contain tritiated water in to-be-treated water. By separating the heavy water gas hydrate substrate containing tritiated water formed at this time from the to-be-treated water, tritiated water is more easily and efficiently separated or removed from light water. To-be-treated water in two or more regions (upper and lower parts) in the Z-axis (vertical) direction of the to-be-treated water in the reaction system is set, and there is no need to provide a temperature difference in these regions. Therefore, it is possible to cope with an increase in the reaction capacity of the reaction system (reaction pressure vessel or the like), and there is an advantage that restrictions on the capacity and shape of the reaction system (vessel) that can be dealt with without using a vertically long tower as the shape of the reaction system (vessel shape or the like) can be reduced.

The vibration over time is not particularly limited, but preferably has a wave form, and examples of the wave form include one or two or more selected from a rectangular wave, trapezoidal wave, triangular wave, sawtooth wave, and sine wave forms and the like, and among them, a sine wave form is suitable (see Fig. 3).

Regarding temperature setting in the vibration over time, the "upper end temperature" and the "lower end temperature" described above can be respectively used as the "maximum temperature" and the "minimum temperature" for the temperature setting of the first temperature and the second temperature. In the present embodiment, one wave cycle means that maximum temperature → minimum temperature or minimum temperature -+ maximum temperature is set to a half cycle (0.5 cycles) and the half cycle is set to two times (that is, maximum temperature -> minimum temperature → maximum temperature, or minimum temperature → maximum temperature → minimum temperature), and either the maximum temperature or the minimum temperature may be set as a reaction start temperature and a reaction start time. During the reaction, the set temperature (temperature axis) of the maximum temperature and/or the minimum temperature may be appropriately changed, and the set period (time axis) of one cycle or half cycle may be appropriately changed. The set period or the set temperature of the half cycle of the vibration over time may be the same vibration over time, or may be vibration over time in which a plurality of different cycles is combined by appropriately changing.

The temperature difference between the maximum temperature and the minimum temperature in the vibration of the to-be-treated water with time in the reaction system is suitably 0.5 to 12.0°C, more suitably 1.0 to 10.0°C, and still more suitably 2.0 to 8.0°C. Furthermore, the minimum temperature is suitably 8.0 to 21.0°C. The minimum temperature in the vibration over time is suitably ±3°C of the thermodynamic equilibrium crystallization temperature at the treatment pressure of the gas hydrate containing the guest molecular gas, more suitably ±2°C of the melting point of the guest molecular gas, and still more suitably ±1°C of the melting point of the guest molecular gas.

The minimum temperature when the HFC-134a is used as the guest molecular gas is 5 to 14°C, the minimum temperature when the HFC-32 is used is 7 to 21°C, and the minimum temperature when CO₂ is used is 2 to 12°C.

The reaction time (total time) due to the vibration over time is not particularly limited, but the temperature control may be performed in all the treatment times, may be performed in some treatment times, or may be performed intermittently.

The time of the half cycle due to the vibration over time may be constant or indefinite, but is suitably 1 to 60 minutes, more suitably 1 to 30 minutes, and still more suitably 5 to 15 minutes as the time of the half cycle.

When the vibration over time is performed, the specific pressure condition in the reaction system is suitably a thermodynamic equilibrium condition where heavy water gas hydrate is crystallized and/or its vicinity.

The "rate of temperature rise (°C/hour)" in the vibration over time is suitably 0.1 to 5°C/hour, more suitably 0.5 to 4°C/hour, and still more suitably 1 to 2°C/hour.

The "rate of temperature decrease (°C/hour)" in the vibration over time is suitably 0.1 to 5°C/hour, more suitably 0.5 to 4°C/hour, and still more suitably 1 to 2°C/hour.

In the present embodiment, it is more suitable to control the temperature of the to-be-treated water in the reaction system so that the temperature of the to-be-treated water in the reaction system is vibrated with time. It is suitable to perform the treatment for a certain period of time in a state where the temperature of the to-be-treated water is vibrated with time. At this time, the pressure condition is suitably the same as or substantially the same as that when the temperature difference is provided. The certain period of time is a total time of treatment for providing a temperature difference in the to-be-treated water, and the temperature control may be performed in all the treatment times, may be performed in a part of the treatment times, or may be performed intermittently. The certain period of time is not particularly limited, and is desirably performed until the tritium concentration in the to-be-treated water falls within a desired range. By providing the treatment time for a certain period of time, the tritiated water is taken in the heavy water gas hydrate substrate, and the tritiated water is separated or removed from the light water. After the certain period of time is ended, a certain period of time may be newly started.

In the <1-2-3-2. Vibration of temperature of the to-be-treated water over time>, the descriptions of configurations such as the to-be-treated water, the guest molecular gas, and the temperature difference, and the like overlapping with the configuration of the <1-2-3-1. Providing a temperature difference between the upper temperature and lower temperature of the to-be-treated water> and the like described above will be appropriately omitted, but these descriptions also apply to the present embodiment, and the descriptions can be appropriately adopted. For example, the spatial variation may be appropriately applied to the variation over time of the <1-2-3-2. Vibration of temperature of the to-be-treated water over time> with the "upper end temperature" as the "first temperature" and the "lower end temperature" as the "second temperature".

### <1 -3. Operation and effect of present embodiment>

According to the present embodiment, tritiated water can be efficiently separated from to-be-treated water containing tritiated water and light water even when the tritium concentration in the to-be-treated water is low. According to the present embodiment, tritiated water can be efficiently separated and removed from to-be-treated water, and the separated tritiated water can also be efficiently recovered.

Furthermore, in the present embodiment, by circulating the to-be-treated water, the tritiated water can be brought into contact with the heavy water gas hydrate substrate, whereby the concentration of the tritiated water can be efficiently increased, the tritiated water having a high concentration can be separated or recovered and is good in terms of operation and concentration, and the production efficiency or the recovery efficiency of the tritiated water having a high purity is good.

Furthermore, since tritiated water can be efficiently separated and removed from to-be-treated water containing tritiated water and light water, contaminated and removed light water, light water having a tritium concentration which is equal to or less than a tritium regulation value, and highly purified light water and the like can be produced, and these light waters can also be used as treated water.

### <1-4. Method for separating heavy water gas hydrate substrate containing tritiated water>

It is suitable to separate the to-be-treated water and the heavy water gas hydrate substrate containing tritiated water. Examples thereof include separating a heavy water gas hydrate substrate containing tritiated water from the to-be-treated water, and separating the to-be-treated water from the heavy water gas hydrate substrate containing tritiated water. The separation or removal method may be on the gas hydrate side or the to-be-treated water side, and is not particularly limited. In the present embodiment, there is an advantage that separation means can be appropriately set according to the separation method and the configuration of the separation device. As the separation means, for example, known separation means such as solid-liquid separation and centrifugation can be used, but the separation means is not limited thereto.

It is suitable to continuously and/or batchwisely perform the present embodiment. The present embodiment can be performed according to a known continuous type or batch type. As the continuous type and/or the batch type, the treatment is suitably performed by a procedure of supplying to-be-treated water, bringing the to-be-treated water into contact with a heavy water gas hydrate substrate, and discharging the to-be-treated water. In the present embodiment, it is suitable to perform a circulation type. The circulation type treatment is suitably performed by a procedure of supplying to-be-treated water, bringing the to-be-treated water into contact with a heavy water gas hydrate substrate, discharging the to-be-treated water after the treatment, and supplying treated water as the to-be-treated water. In the present embodiment, the heavy water gas hydrate substrate may be regarded as a chromatography carrier, and the inside of the reaction system may be a flow path (for example, piping or the like) including the heavy water gas hydrate substrate as a carrier. The reaction system (for example, one-pass treatment or the like) may be configured to allow to-be-treated water to flow into the flow path and discharge the treated water, and the length of the flow path may be a long flow path in consideration of a height equivalent of one theoretical plate (HETP) when the length of a column of column chromatography is set.

As a suitable aspect in the present embodiment, it is suitable to bring the treated water after the primary treatment after being treated with the heavy water gas hydrate substrate into contact with the heavy water gas hydrate substrate which may contain tritiated water again, whereby light water in which tritiated water is further reduced can be obtained.

As a suitable aspect in the present embodiment, it is suitable to bring contaminated water into contact with the heavy water gas hydrate substrate containing tritiated water after the primary treatment, whereby the concentration of tritium in the heavy water gas hydrate substrate can be further increased, which is preferable.

The primary treatment and the subsequent treatment mean that the primary treatment water after the method of the present embodiment is first performed is further subjected to the secondary treatment and the subsequent treatment using the method of the present embodiment, and the treatment by the circulation type and/or the series type is suitable. As the series type, a plurality of treatment methods or treatment devices can be disposed in series. As the circulation type, a configuration in which to-be-treated water containing tritiated water such as raw water is mixed with primary treatment water is preferable, and a plurality of treatment methods and the like may be incorporated in this circulation type in series, or in parallel, or in series and parallel.

### <1-5. tritiated water recovery process>

In the present embodiment, it is suitable to further separate and recover a part of the heavy water gas hydrate substrate containing tritiated water. Since the solution containing tritiated water can be recovered by the separation and recovery, the tritiated water can be efficiently recovered.

When a part of the heavy water gas hydrate substrate containing tritiated water is separated and recovered, it is suitable to separate a portion containing at least tritiated water from the heavy water gas hydrate substrate containing tritiated water, and it is suitable that the tritiated water is laminated on the surface of the substrate.

The recovery means is not particularly limited, but examples thereof include melting and cutting, and a known method of removing the surface of an ice block may be used.

Mechanical means configured to be able to scrape the surface, such as rotating blades and drum rotation, may be performed.

Since tritiated water is present at a high concentration in a recovery portion such as the obtained molten portion or scraped portion, tritium can be efficiently recovered at a high concentration. It is also possible to recover tritiated water in a liquid state or a solid state or the like by controlling the temperature at the time of recovery. Furthermore, it is also possible to shift to any process such as high concentration of tritiated water, film removal of tritiated water, or storage of tritiated water.

When the state of the gas hydrate substrate is maintained, the heavy water gas hydrate substrate obtained by separating tritiated water from the heavy water gas hydrate substrate containing tritiated water is suitably reused as the heavy water gas hydrate substrate of the present embodiment, and the process of forming heavy water gas hydrate again can be omitted or shortened, which is advantageous from the viewpoint of economic efficiency and working efficiency. The heavy water gas hydrate substrate from which tritiated water has been separated can be melted to be in a state of a liquid of heavy water or a mixed liquid containing heavy water, and heavy water can also be recovered.

### 2. Method for producing or forming heavy water gas hydrate substrate containing tritiated water according to the present embodiment

In the method for producing a heavy water gas hydrate substrate containing tritiated water according to the present embodiment, descriptions of configurations and the like such as to-be-treated water and a temperature difference and the like, which overlap with the configurations of the above "1.", and "3." to "6." described later, and the like, will be appropriately omitted, but the descriptions of the "1." and "3." to "6." and the like also apply to the present embodiment, and the descriptions can be appropriately adopted.

The present embodiment can provide a method for producing or forming a heavy water gas hydrate substrate, including providing a temperature difference in a heavy water gas hydrate substrate, and to-be-treated water containing tritiated water and light water based on a heavy water gas hydrate crystallization temperature zone and its vicinity in the presence of a guest molecular gas under a pressure condition where heavy water gas hydrate or tritiated water gas hydrate can be crystallized. As a result, tritiated water in the to-be-treated water can be taken into the heavy water gas hydrate substrate, and by performing this for a certain period of time, it is possible to more easily and efficiently form a heavy water gas hydrate substrate containing tritiated water having a higher concentration than that of a heavy water gas hydrate substrate which may contain tritiated water as a base. Furthermore, by recovering the formed heavy water gas hydrate containing tritiated water, it is possible to obtain to-be-treated water or treated water in which tritiated water is reduced. By using the recovered heavy water gas hydrate substrate containing tritiated water, it is possible to recover tritiated water by melting a predetermined substrate portion such as a surface layer of the substrate or melting the entire substrate, and at this time, it is also possible to recover the heavy water gas hydrate substrate (solid) or heavy water (liquid) for reuse in the method (tritiated water separation method or the like) in the present embodiment.

### 3. Method for producing light water having a tritium concentration which is equal to or less than a tritium regulation value from water contaminated with tritiated water according to the present embodiment

In the method for producing light water having a tritium concentration which is equal to or less than a tritium regulation value from water contaminated with tritiated water according to the present embodiment, descriptions of configurations such as to-be-treated water and a temperature difference and the like, which overlap with the configurations of the above "1." and "2.", and "4.", "5.", and "6." described later, and the like will be appropriately omitted, but the descriptions of "1.", "2.", "4.", "5.", and "6." and the like also apply to the present embodiment, and the descriptions can be appropriately adopted.

In the present embodiment, under a pressure condition where heavy water gas hydrate or tritiated water gas hydrate can be crystallized, it is possible to provide a method for producing light water having a tritium concentration which is equal to or less than a tritium regulation value from water contaminated with tritiated water, the method including providing a temperature difference in a heavy water gas hydrate substrate which may contain tritiated water, and to-be-treated water containing tritiated water and light water based on a heavy water gas hydrate crystallization temperature zone and its vicinity thereof in the presence of a guest molecular gas. By providing the temperature difference, it is possible to form a heavy water gas hydrate substrate in which tritiated water in the to-be-treated water is taken in and contained. By adopting the circulation type of to-be-treated water, the to-be-treated water is repeatedly circulated so as to be in contact with the heavy water gas hydrate substrate which may contain tritiated water, whereby a tritium concentration in the to-be-treated water can be reduced.

After a lapse of a certain period of time, the to-be-treated water is recovered, separated, or taken out of the reaction system, whereby light water having a tritium concentration which is equal to or less than a tritium regulation value can be obtained. Alternatively, after a lapse of a certain period of time, the formed heavy water gas hydrate substrate containing tritiated water is recovered, separated, or removed, whereby light water having a tritium concentration which is equal to or less than a tritium regulation value can be obtained.

### 4. Example of present embodiment

Examples of the present embodiment include a first embodiment (Fig. 1A), a second embodiment (Fig. 1B), and a third embodiment (Fig. 2), but the present embodiment is not limited thereto. The first embodiment, the second embodiment, and the third embodiment can be executed by a computer or the like, or a control unit or the like.

In the example of the present embodiment, descriptions of configurations and the like such as the to-be-treated water and the temperature difference and the like, which overlap with the configurations of the above "1." and "2.", and "3.", "5.", and "6." described later, and the like, will be appropriately omitted, but the descriptions of "1.", "2.", "3.", "5.", and "6." and the like apply to the present embodiment, and the descriptions can be appropriately adopted.

### <4-1. First embodiment>

As the first embodiment, it is possible to perform a process of providing a temperature difference in a heavy water gas hydrate substrate which may contain tritiated water, and to-be-treated water containing tritiated water and light water in the presence of a guest molecular gas based on a heavy water gas hydrate crystallization temperature zone and its vicinity under a pressure condition where heavy water gas hydrate or tritiated water gas hydrate can be crystallized. By the process of providing the temperature difference, a process of taking tritiated water in the to-be-treated water into the heavy water gas hydrate substrate to form the heavy water gas hydrate substrate containing tritiated water can be performed (step 1). The liquid phase of the to-be-treated water may be circulated in the reaction system using an external liquid circulation circuit. In the formation process, a mixed liquid of tritiated water and light water may be introduced into the process of providing the temperature difference, or the liquid phase of the to-be-treated water may be discharged before or after the introduction of the mixed liquid. After the formation process, a recovery process of recovering the formed heavy water gas hydrate substrate containing tritiated water can be performed. The first embodiment may be a method for producing a heavy water gas hydrate substrate containing tritiated water, or a method for treating to-be-treated water containing light water contaminated with tritiated water. As a process prior to the process of providing the temperature, a process of forming a heavy water gas hydrate substrate may be provided. The first embodiment may be executed by a control unit.

### <4-2. Second embodiment>

As the second embodiment, as step S11, it is possible to perform a process of providing a temperature difference in a heavy water gas hydrate substrate which may contain tritiated water, and to-be-treated water containing tritiated water and light water in the presence of a guest molecular gas based on a heavy water gas hydrate crystallization temperature zone and its vicinity under a pressure condition where heavy water gas hydrate or tritiated water gas hydrate can be crystallized. At this time, the tritiated water in the to-be-treated water is taken into the heavy water gas hydrate substrate to form the heavy water gas hydrate substrate containing tritiated water, while a tritium concentration in the to-be-treated water is further reduced. As a process prior to the process of providing the temperature, a process of forming a heavy water gas hydrate substrate may be further provided and performed.

As step S12, a process of discharging the to-be-treated water in which the tritium concentration is reduced to the outside of the reaction system can be performed, whereby the to-be-treated water in which the discharged tritiated water is reduced can be recovered. Alternatively, a process of recovering to-be-treated water having a reduced tritium concentration may be performed by taking out the heavy water gas hydrate substrate containing tritiated water to the outside of the reaction system. The liquid phase of the to-be-treated water may be circulated in the reaction system using an external circulation liquid circuit. The second embodiment may be a method for treating to-be-treated water containing light water contaminated with tritiated water, or light water contaminated with tritiated water. As a process prior to the process of providing the temperature, a process of forming a heavy water gas hydrate substrate may be provided.

As a result, to-be-treated water having a tritium concentration lower than that of the initial to-be-treated water can be obtained. The second embodiment may be executed by a control unit.

### <4-3. Third embodiment>

As the third embodiment, as step S21, it is possible to perform a process of providing a temperature difference in a heavy water gas hydrate substrate which may contain tritiated water, and to-be-treated water containing tritiated water and light water in the presence of a guest molecular gas based on a heavy water gas hydrate crystallization temperature zone and its vicinity under a pressure condition where heavy water gas hydrate or tritiated water gas hydrate can be crystallized. As a process prior to the process of providing the temperature, a process of forming a heavy water gas hydrate substrate may be further provided and performed.

As step S22, a process of discharging the to-be-treated water in which the tritium concentration is reduced to the outside of the reaction system is performed, whereby the to-be-treated water in which the discharged tritiated water is reduced can be recovered. As a result, to-be-treated water having a tritium concentration lower than that of the initial to-be-treated water can be obtained.

As the determination criterion of the recovery of the light water, the light water recovery process can be performed when the tritium concentration of the tritiated water is less than or equal to a set value such as less than or equal to a regulation value, and the process of providing a temperature difference may be repeatedly performed until the tritium concentration of the tritiated water reaches the set value such as less than or equal to the regulation value when the tritiated water is not less than or equal to the regulation value.

In step S23, a user or a control unit determines whether to introduce light water (contaminated water) contaminated with tritiated water. As the determination criterion of the introduction of the contaminated water, it may be determined whether or not to recover a heavy water gas hydrate substrate containing tritiated water. Since the gas hydrate substrate is used, the ability of the gas hydrate substrate to take in the tritiated water from the contaminated water is very high, and continuous contaminated water treatment is possible.

When the contaminated water is introduced (YES), step S21 and subsequent steps are performed. When the contaminated water is not introduced (NO), a process of recovering a heavy water gas hydrate substrate containing tritiated water is performed. Since tritiated water gas hydrate is present in the vicinity of the surface layer of the heavy water gas hydrate substrate containing tritiated water, the solid of a tritiated water gas hydrate portion in the vicinity of the surface layer or the liquid of the tritiated water can be recovered using melting or scraping, whereby the tritiated water having a high concentration can be recovered. The heavy water gas hydrate substrate from which the tritiated water gas hydrate portion has been removed can be reused as the heavy water gas hydrate substrate used in the process of providing the temperature difference.

In step S25, when a reusable heavy water gas hydrate substrate is used in the process of providing the temperature difference (YES), the renewable gas hydrate substrate can be supplied to the process of providing the temperature difference. As a result, step S21 can be continuously performed.

In step S25, when the reusable heavy water gas hydrate substrate is used in the process of providing the temperature difference (NO), the third embodiment can be ended. By performing a recovery process of recovering a reusable heavy water gas hydrate substrate, the heavy water gas hydrate substrate may be stored as a solid or a heavy water liquid.

The third embodiment may be executed by a control unit.

### <4-4. Others>

As a more specific suitable operation aspect, a contaminated water treatment device according to the present embodiment can include and perform one or two or more kinds selected from crystallizing a heavy water gas hydrate substrate in a reaction pressure vessel;
after the crystallization, discharging and removing heavy water in a liquid phase from the lower part of the reaction pressure vessel;
mixing the heavy water gas hydrate substrate in the liquid phase (liquid) circulation with the heavy water gas hydrate substrate being present in the reaction pressure vessel under a condition of a slightly high temperature and low pressure in a thermodynamic equilibrium condition where heavy water gas hydrate is crystallized;
introducing to-be-treated water (contaminated water) containing tritiated water and light water into the reaction pressure vessel in which the heavy water gas hydrate substrate is present while maintaining the temperature and pressure conditions, whereby the to-be-treated water containing the heavy water gas hydrate substrate, tritiated water, and light water is present in the reaction pressure vessel;
mixing to-be-treated water containing the heavy water gas hydrate substrate, tritiated water, and light water in the reaction pressure vessel under a thermodynamic equilibrium condition in which heavy water gas hydrate is crystallized; and
in the reaction pressure vessel, providing a temperature difference in the to-be-treated water containing the heavy water gas hydrate substrate, tritiated water, and light water in the presence of a guest molecular gas based on a heavy water gas hydrate crystallization temperature zone and its vicinity under a pressure condition where heavy water gas hydrate or tritiated water gas hydrate can be crystallized, whereby the tritiated water in the to-be-treated water is taken into the heavy water gas hydrate substrate. As a result, it is possible to execute a method for treating to-be-treated water containing light water contaminated with tritiated water, or a method for separating tritiated water from to-be-treated water containing tritiated water and light water.

As a more specific suitable operation mode, the contaminated water treatment device according to the present embodiment can include and perform one or two or more kinds selected from crystallizing a heavy water gas hydrate substrate in a reaction pressure vessel;
after the crystallization, discharging and removing heavy water in a liquid phase from the lower part of the reaction pressure vessel;
mixing the heavy water gas hydrate substrate in liquid phase (liquid) circulation with the heavy water gas hydrate substrate being present in the reaction pressure vessel under a condition of a slightly high temperature and low pressure in a thermodynamic equilibrium condition where heavy water gas hydrate is crystallized;
introducing to-be-treated water (contaminated water) containing tritiated water and light water into the reaction pressure vessel in which the heavy water gas hydrate substrate is present while maintaining the temperature and pressure conditions, whereby the to-be-treated water containing the heavy water gas hydrate substrate, tritiated water, and light water is present in the reaction pressure vessel;
mixing to-be-treated water containing the heavy water gas hydrate substrate, tritiated water, and light water in the reaction pressure vessel under a thermodynamic equilibrium condition in which heavy water gas hydrate is crystallized; and
in the reaction pressure vessel, a temperature difference is provided in the to-be-treated water containing the heavy water gas hydrate substrate, tritiated water, and light water in the presence of a guest molecular gas based on a heavy water gas hydrate crystallization temperature zone and its vicinity under a pressure condition where heavy water gas hydrate or tritiated water gas hydrate can be crystallized, whereby the tritiated water in the to-be-treated water is taken into the heavy water gas hydrate substrate. As a result, it is possible to execute a method for treating to-be-treated water containing light water contaminated with tritiated water, or a method for separating tritiated water from to-be-treated water containing tritiated water and light water.

### 5. Device or system, and program for executing method of present embodiment according to present embodiment

In the device or system and the program for executing the method of the present embodiment according to the present embodiment, descriptions of configurations and the like such as to-be-treated water and a temperature difference and the like, which overlap with the configurations of the above "1." to "4." and "6." described later, and the like, will be appropriately omitted, but the descriptions of the "1." to "4." and "6." and the like also apply to the present embodiment, and the descriptions can be appropriately adopted.

The method of the present embodiment can also be realized by a control unit including a CPU or the like in a device for managing the method such as the above-described treating method or producing method (for example, a computer, a PLC, a server, or a cloud service, or the like). The method of the present embodiment may also be stored as a program in a hardware resource including a recording medium (nonvolatile memory (USB memory or the like), HDD, CD, DVD, or Blu-ray or the like) or the like, and realized by the control unit. The recording medium is suitably a recording medium readable by a computer or the like. It is also possible to provide a device including the control unit or the system, such as a tritiated water separation system that controls the temperature of the to-be-treated water so that tritiated water is separated by the control unit. The management device includes at least a CPU as a constituent element of a computer or the like, and includes an input unit such as a keyboard, a communication unit such as a network, a display unit such as a display, a storage unit such as an HDD, a ROM, and a RAM and the like, and one or two or more thereof can be selected. Among them, it is suitable to include a RAM, a storage unit, a display unit, and an input unit, and the selected components are connected by, for example, a bus as a data transmission path. The control unit can also provide a device including the control unit or the system, such as the treating method or the treating system described above. The device may include an input unit such as a touch panel or a keyboard, a communication unit such as a network or an internal or external access, and a display unit such as a touch panel or a display, and the like.

### 6. Device for separating tritiated water from to-be-treated water or device for treating contaminated water contaminated with tritiated water, and device for producing light water having tritium concentration which is equal to or less than tritium regulation value from contaminated water contaminated with tritiated water, according to present embodiment

In the device for separating tritiated water from to-be-treated water or the device for treating contaminated water contaminated with tritiated water and the device for producing light water having a tritium concentration which is equal to or less than a tritium regulation value from water contaminated with tritiated water, according to the present embodiment, descriptions of configurations and the like such as to-be-treated water and a temperature difference and the like, which overlap with the configurations of the above "1." to "5." and the like will be appropriately omitted, but the descriptions of "1." to "5." and the like also apply to the present embodiment, and the descriptions can be appropriately adopted.

### <6-1. Device according to present embodiment>

The present embodiment can provide, as the device according to the present embodiment, a device configured to perform the method of the present embodiment described above. Examples of the device of the present embodiment include, but are not limited to, a device for separating tritiated water from to-be-treated water, a treatment device for contaminated water contaminated with tritiated water, and a device for producing light water having a tritium concentration which is equal to or less than a tritium regulation value from water contaminated with tritiated water.

The device of the present embodiment may be a device (for example, a computer or the like) or a system for executing the method of the present embodiment, a device or a system in which a program for executing the method of the present embodiment is stored in a hardware resource, or a device or a system including a storage medium storing the program or capable of accessing the storage medium.

The contaminated water treatment device according to the present embodiment is suitably a treatment device for to-be-treated water containing light water contaminated with tritiated water, the treatment device including at least a reaction pressure vessel capable of forming a heavy water gas hydrate substrate which may contain tritiated water, and a supply and discharge unit configured to be able to supply and discharge the to-be-treated water. The treatment device for the to-be-treated water may include at least a reaction system device (specifically, a reaction pressure vessel with a temperature control mechanism) capable of controlling a temperature and a pressure (see, for example, Fig. 4). The tritiated water contamination treatment device of the present embodiment can also be used as a tritiated water separation device from contaminated water. Furthermore, in the present embodiment, a tritiated water contamination treatment device further including a temperature control unit configured to be able to control the temperature of the to-be-treated water in the reaction pressure vessel and/or a reaction control unit forming a heavy water gas hydrate substrate which may contain tritiated water, or a tritiated water contamination treatment system externally provided in an accessible state is more suitable.

The contaminated water treatment device of the present embodiment is suitably a contaminated water treatment device configured to include a supply and discharge unit (means) configured to be able to supply and discharge to-be-treated water, a formation and crystallization unit (means) configured to be able to form or crystallize a gas hydrate substrate of heavy water and/or tritiated water, and a reaction control unit (means) configured to be able to perform temperature control and pressure control for the formation or crystallization. Furthermore, an external liquid circulation circuit (flow path) configured to input and output the to-be-treated water in the reaction system to and from the outside of the system to bring the to-be-treated water into circulation contact may be provided, and a temperature adjustment mechanism configured to be able to adjust the temperature of the to-be-treated water may be provided in the circuit (flow path).

A more specific example of the contaminated water treatment device is suitably a device including a reaction pressure vessel with a temperature control mechanism for forming gas hydrate, which has a supply port and a discharge port for to-be-treated water and can cause a contact reaction between the to-be-treated water and the gas hydrate substrate, but the device is not limited thereto. The contaminated water treatment device can form a heavy water gas hydrate substrate and a heavy water gas hydrate substrate which may contain tritiated water. As the contaminated water treatment device, a known device capable of gas hydrate crystallization of heavy water and/or tritiated water may be used, but for example, it is suitable that a liquid circulation circuit (piping or the like) connecting a head part (upper part) and a bottom part (lower part) is provided outside the reaction pressure vessel, and a pump for pumping from the bottom part toward the upper part is provided in an intermediate part of the liquid circulation circuit.

The contaminated water treatment device of the present embodiment preferably includes a control unit capable of controlling a treatment amount of to-be-treated water, formation of a heavy water gas hydrate substrate which may contain tritiated water, and a temperature and pressure for forming gas hydrate, and the like according to the method of the present embodiment.

The contaminated water treatment device of the present embodiment suitably further includes a device (supply means) that supplies (feeds) the to-be-treated water to the reaction pressure vessel (or the contact reaction unit) in which the reaction system of the present embodiment is performed, and a device (discharge means) that discharges (extracts) the to-be-treated water after the contact reaction, and the like.

The contaminated water treatment device appropriately includes, in addition to the reaction pressure vessel, a supply unit of the heavy water gas hydrate substrate, a heating/cooling unit, a molecular gas supply unit, a supply unit of the to-be-treated water, and a discharge unit of the to-be-treated water after the contact reaction, and the like, and any one or a combination thereof can be appropriately performed.

The heating/cooling unit (for example, a heater or a refrigerator or the like) and the molecular gas supply unit (for example, a pipe, a regulating valve, or a pump or the like) may be a device (means) for forming and/or melting gas hydrate. The heating/cooling unit and the molecular gas supply unit may be controlled by a temperature control unit (mechanism) and a pressure control unit (mechanism), respectively.

It is suitable to further include a reaction control unit that controls these units and controls the formation reaction. The units may be disposed in the contaminated water treatment device of the present embodiment, or may be disposed in a device (such as a server) that is accessible.

The contaminated water treatment device of the present embodiment suitably further includes a device (supply means) that supplies (feeds) the to-be-treated water to the contact reaction unit, and a device (discharge means) that discharges (drains) the to-be-treated water after the contact reaction, and the like. A measurement device that measures the tritium concentration of the to-be-treated water after the contact reaction and a determination treatment unit that determines whether or not the to-be-treated water has a tritium concentration which is equal to or less than a reference concentration may be included. When the tritium concentration is equal to or less than the reference value, the determination treatment unit can cause the to-be-treated water to flow into a light water tank for storing, or can discharge the to-be-treated water to the outer system. When the tritium concentration is equal to or more than the reference value or more than the reference value, the to-be-treated water can be retransmitted to the contact reaction unit.

The contaminated water treatment device of the present embodiment may further include a tritiated water recovery unit for recovering tritiated water from the tritium-containing heavy water gas hydrate substrate formed by providing the temperature difference. The tritiated water recovery unit can be performed in the tank of the contact reaction unit described above. The temperature control unit and the pressure control unit in this case control them, whereby the tritiated water can be recovered from the heavy water gas hydrate substrate containing tritiated water. A solid-liquid separation section for recovering a heavy water gas hydrate substrate containing tritiated water by solid-liquid separation may be further provided. The recovered tritiated water can be stored in a tritiated water tank. The heavy water can also be recovered and stored in a heavy water tank by adjusting a melting condition. The gas generated by melting can also be retransmitted to the gas supply unit.

The contaminated water treatment device of the present embodiment may include a contaminated water treatment control unit that controls the contact reaction unit, and the control unit can manage and control the contaminated water treatment method (contact reaction, gas hydrate formation/melting, and recovery and the like) of the present invention.

According to the contaminated water treatment device of the present embodiment, the tritiated water can be efficiently separated from the contaminated water of the to-be-treated water containing the tritiated water, whereby the tritiated water in the treated water can be removed or reduced.

Furthermore, the contaminated water treatment device of the present embodiment suitably further includes a device for forming or producing a heavy water gas hydrate substrate. The device for forming or producing the heavy water gas hydrate substrate may include a gas hydrate forming treatment unit, and may be controlled by the contaminated water treatment control unit.

Examples of the heavy water gas hydrate substrate supply unit include a supply pipe and a supply pump (slurry pump or the like), and a hydrate pulverizing device may be provided before the supply to the contact reactor.

### <6-2. Treatment device 100 for to-be-treated water>

As a more preferable aspect in the present embodiment, the outline of a treatment device for to-be-treated water containing light water contaminated with tritiated water (hereinafter also referred to as "treatment device for to-be-treated water") will be described. As shown in Fig. 4, a present treatment device 100 for to-be-treated water includes a reaction pressure vessel 1 capable of forming gas hydrate and configured to perform a treatment of to-be-treated water, an external liquid circulation circuit 2 for circulating a liquid phase (liquid) in the reaction pressure vessel, an external liquid circulation pump 3 for feeding a liquid in the circulation circuit 2, input and output ports with valves (input port 4 with a valve, upper output port 5 with a valve, and lower output port 6 with a valve) for introducing and discharging a sample into and from the reaction pressure vessel, a jacket-type warm refrigerant temperature control mechanism 7 for adjusting or setting the temperature of the reaction pressure vessel 1, a jacket-type warm refrigerant temperature control mechanism 8 for adjusting or setting the temperature of the external liquid circulation circuit, a sensor (pressure sensor 9, upper temperature sensor 10, lower temperature sensor 11) for measuring a pressure and a temperature in the reaction pressure vessel, and a control device (not shown) capable of performing display recording. The temperature of the to-be-treated water in the reaction pressure vessel 1 can also be adjusted by the jacket-type warm refrigerant temperature control mechanism 8 provided in the external liquid circulation circuit.

The reaction pressure vessel 1 is a cylindrical vessel having an internal volume of 150 cm³, and is a vessel from which a head portion can be removed. Therefore, a solid in the vessel can be taken out by removing a head. The cylindrical vessel has a diameter of 4 cm, a height of 12 cm, and a height of 3 with respect to a diameter of 1. It is desirable to consider the lower limit value and upper limit value thereof in consideration of the scale of a treatment and treatment capacity, but for example, the height with respect to a diameter of 1 is 1 or more, and the longer the upper limit value is, the more the treatment capacity such as separation capacity is improved without particular limitation. However, in the case of the reaction pressure vessel, for example, the upper limit value of the height with respect to a diameter of 1 is suitably 5 or less or 4 or less. In the case of a column chromatography-like structure, the lower limit value can be appropriately set in consideration of the separation capacity of the theoretical plate equivalent height HETP and a passing time (work efficiency), and examples thereof include 100 or less, 50 or less, and 10 or less, but are not limited thereto.

The external liquid circulation circuit 2 for circulating the liquid phase in the reaction pressure vessel connects the upper end and lower end of the reaction pressure vessel. An external liquid circulation pump 3 whose a liquid feeding speed and a liquid feeding direction are variable (forward and backward) is installed in an intermediate part, whereby the liquid phase can be forcibly circulated. By reversing the liquid feeding direction, the pump 3 can introduce the liquid below the reaction pressure vessel from above the reaction pressure vessel through the warm refrigerant temperature control mechanism 7 portion, or can introduce the liquid above the reaction pressure vessel from below the reaction pressure vessel through the warm refrigerant temperature control mechanism 7 portion.

Among input and output ports with valves for introducing and discharging a sample into and from the reaction pressure vessel, a pipe reaching the vicinity of the bottom surface inside the reaction pressure vessel is connected to the input port 4 via a valve, and the sample introduction is input from the lowermost part (near the bottom surface) of the reaction pressure vessel. The output ports are installed at two positions of the upper end (near the upper surface) and lower end (near the bottom surface) of the reaction pressure vessel. In the upper output port 5 at the upper end, a pipe protrudes from the vicinity of the upper surface in the vessel to the outside upward, is configured to be able to discharge the gas phase using a valve, and is mainly used for discharging the gas phase. In the lower output port 6 at the lower end, a pipe protrudes downward from the vicinity of the bottom surface in the vessel to the outside, is configured to be able to discharge the liquid phase via a valve, and is mainly used for discharging the liquid phase.

The jacket-type warm refrigerant temperature control mechanism 7 provided outside the reaction pressure vessel is a device capable of individually performing the temperature setting or temperature adjustment of the to-be-treated water or the like in the reaction pressure vessel, and the j acket-type warm refrigerant temperature control mechanism 8 provided outside the external liquid circulation circuit 2 is a device capable of individually performing the temperature setting or temperature adjustment of the liquid in the external liquid circulation circuit 2. The mechanisms are disposed independently of each other. Each of the warm refrigerant temperature control mechanism 7 for the reaction pressure vessel and the warm refrigerant temperature control mechanism 8 for the external liquid circulation circuit can set the temperature in units of 0.1 °C, and has a heat capacity capable of stabilizing the temperature with an accuracy of ±0.1°C in a thermodynamic equilibrium state. The warm refrigerant of the warm refrigerant temperature control mechanism 7 for the reaction pressure vessel is circulated in a jacket provided in the entire reaction pressure vessel to control the temperature of the to-be-treated water or the like in the reaction pressure vessel. By circulating the warm refrigerant of the warm refrigerant temperature control mechanism 8 for the external liquid circulation circuit through the jacket installed on the upper end side of the reaction pressure vessel of the external liquid circulation circuit, the temperature of a fluid such as the to-be-treated water to be introduced into the reaction pressure vessel can be controlled, and the temperature of the liquid or the like in the reaction pressure vessel can also be controlled by introducing the temperature-controlled fluid into the reaction pressure vessel. The temperature or flow rate or the like of the warm refrigerant in each of the warm refrigerant temperature control mechanisms 7 and 8 is controlled by a control device (not illustrated) including a single or a plurality of temperature control devices independently connected to each of the warm refrigerant temperature control mechanisms 7 and 8, whereby the temperature of the liquid in the reaction pressure vessel can be independently or jointly adjusted. The liquid may be to-be-treated water, contaminated water, or to-be-treated water including a gas hydrate substrate, or may be a gas hydrate substrate after the liquid phase is discharged.

A pressure sensor 9 for pressure measurement in the reaction pressure vessel is installed at the upper end of the reaction pressure vessel 1. The upper temperature sensor 10 and the lower temperature sensor 11 for temperature measurement in the reaction pressure vessel are configured to be able to measure the upper end temperature and the lower end temperature in the reaction pressure vessel, respectively, and a temperature measurement portion is installed in the vicinity of 1/16 from each of the upper surface and the bottom surface, respectively, when the height in the reaction pressure vessel is 1.

A tritium concentration in the present Example was measured by a liquid scintillation method. A temperature in the present Example was measured at °C.

### EXAMPLES

Hereinafter, the present technique will be described in more detail based on Examples and the like. Note that Examples and the like described below are examples of representative embodiments of the present technique, and the scope of the present technique is not narrowly interpreted by Examples.

A treatment device 100 for to-be-treated water was used in Examples. The outline, configuration, and operation of the treatment device 100 for to-be-treated water are as described above in <6-2. Treatment device 100 for to-be-treated water>. As shown in Fig. 4, a present treatment device 100 for to-be-treated water includes a reaction pressure vessel 1 capable of forming gas hydrate and configured to perform a treatment of to-be-treated water, an external liquid circulation circuit 2 for circulating a liquid phase (liquid) in the reaction pressure vessel, an external liquid circulation pump 3 for feeding a liquid in the circulation circuit 2, input and output ports with valves (input port 4 with a valve, upper output port 5 with a valve, and lower output port 6 with a valve) for introducing and discharging a sample into and from the reaction pressure vessel, a jacket-type warm refrigerant temperature control mechanism 7 for adjusting or setting the temperature of the reaction pressure vessel 1, a jacket-type warm refrigerant temperature control mechanism 8 for adjusting or setting the temperature of the external liquid circulation circuit, a sensor (pressure sensor 9, upper temperature sensor 10, lower temperature sensor 11) for measuring a pressure and a temperature in the reaction pressure vessel, and a control device (not shown) capable of performing display recording. The temperature of the to-be-treated water in the reaction pressure vessel 1 can also be adjusted by the jacket-type warm refrigerant temperature control mechanism 8 provided in the external liquid circulation circuit.

### <Example 1>

As contaminated water for test, a commercially available tritium reagent was mixed with ultrapure water to prepare the contaminated water so that the tritium concentration of the contaminated water was approximately 5.00 × 10⁵ Bq/L. The actual tritium concentration of the prepared contaminated water was measured by a liquid scintillation method. The prepared contaminated water was placed in a wide-mouth bottle made of polyethylene, and placed in a water bath at 15°C for precooling. This was used as the contaminated water for test.

Commercially available heavy water (deuterium oxide) having a purity of 99.8% was introduced into a reaction pressure vessel 1 degassed with a vacuum pump from an input port 4, and the reaction pressure vessel was adjusted by warm refrigerant temperature control mechanisms 7 and 8 so that a lower temperature in the reaction pressure vessel was 15.0°C. A commercially available HFC-134a gas was introduced into the reaction pressure vessel from the input port 4, and a pressure in the reaction pressure vessel 1 was adjusted so that an absolute pressure was 0.80 MPa. As a result, a guest molecular gas was dissolved in heavy water until the HFC-134a gas as the guest molecular gas became supersaturated. The inside of the reaction pressure vessel was stirred by forcibly circulating a liquid phase by an external liquid circulation circuit 2. Thereafter, the temperature was lowered by the warm refrigerant temperature control mechanisms 7 and 8 until the lower temperature of the reaction pressure vessel reached 4.0°C, and a liquid temperature in a reaction solution was maintained as it was by the warm refrigerant temperature control mechanism 7 to crystallize heavy water gas hydrate. A heavy water gas hydrate substrate obtained by opening the reaction pressure vessel was uniformly crystallized in the entire reaction pressure vessel. The heavy water gas hydrate substrate had an actually measured relative density of about 55%, and was a porous body in which sherbet gas hydrate was assembled. At this time, the crystallization pressure condition and crystallization temperature of heavy water gas hydrate or tritiated water gas hydrate used in this test were determined.

It is considered that the formation temperature of the gas hydrate exhibits the same tendency as that of an ice formation temperature since the hydrate is obtained by taking a gas into ice. For the melting point of ice, heavy water: 3.82°C (276.97 K) [Reference Document 1] and tritiated water: 4.48°C (277.63 K) [Reference Document 2] are set, and the temperature difference is 0.66 K. Therefore, in the case of the hydrate, it is considered that tritiated water is about 0.5 K higher than heavy water. In consideration of this, in this test, a pressure condition where the heavy water gas hydrate or the tritiated water gas hydrate can be crystallized, and a temperature at which the heavy water gas hydrate or the tritiated water gas hydrate can be crystallized and its vicinity were set. [Reference Document 1] Long, E. A.; Kemp, J.D., J. Am. Chem. Soc. 1936, 58 (10), 1829-1834. [Reference 2] Jones, W. M., J. Am. Chem. Soc. 1952, 74 (23), 6065-6066.

After the heavy water gas hydrate was crystallized, the heavy water in the liquid phase in the reaction pressure vessel was discharged and removed from the lower output port. Thereafter, the lower temperature, upper temperature, and pressure of the reaction pressure vessel were adjusted, and the inside of the reaction pressure vessel was adjusted so as to be slightly higher in a temperature and lower in a pressure than a thermodynamic equilibrium condition where heavy water gas hydrate was crystallized (as an example, temperature: 0.5°C, absolute pressure: 0.03 MPa). The inside of the reaction pressure vessel was stirred by forcibly circulating the liquid phase by the external liquid circulation circuit 2. A specific condition includes lower and upper temperatures of 14.0°C and an absolute pressure of 0.4 MPa, but this is merely an example. Under the temperature and pressure conditions, the heavy water gas hydrate is in a thermodynamically metastable state, and is not melt-decomposed. While the temperature and pressure conditions were maintained, 140 mL of the prepared contaminated water for test was slowly introduced from the input port 4 into the reaction pressure vessel in which the heavy water gas hydrate substrate was present, and the amount of the contaminated water discharged to the outside of the reaction pressure vessel after the treatment was 63 mL. At this time, the amount of the introduced contaminated water for test was 90% of the volume of heavy water (63 mL; liquid phase) discharged and removed after the heavy water gas hydrate was crystallized.

A control unit adjusted the upper temperature (upper end temperature) and pressure of the to-be-treated water containing the heavy water gas hydrate substrate and the contaminated water in the reaction pressure vessel, and set a thermodynamic equilibrium condition where the heavy water gas hydrate was gradually crystallized while adjusting the temperature so that the temperature did not rise due to an exothermic reaction at the time of crystal precipitation (average temperature rising rate: about 0.02°C/min). In the initial stage, the lower temperature and upper temperature of the reaction pressure vessel were set to be the same. A specific condition includes a temperature of 12.3°C and an absolute pressure of 0.37 MPa, but this is merely an example. The to-be-treated water containing the heavy water gas hydrate substrate and the contaminated water in the reaction pressure vessel was stirred by forcibly circulating the liquid phase (mainly contaminated water) by the external liquid circulation circuit. Thereafter, an HFC-134a gas as a guest molecular gas was added until the pressure reached a predetermined pressure, and further adjustment was performed so as to maintain the predetermined pressure.

The lower temperature of the to-be-treated water containing the heavy water gas hydrate substrate and the contaminated water in the reaction pressure vessel was maintained, and a control condition was changed so that the upper temperature of the to-be-treated water containing the heavy water gas hydrate substrate and the contaminated water in the reaction pressure vessel was 5.0°C higher than the lower temperature.

The upper temperature and lower temperature of the to-be-treated water containing the heavy water gas hydrate substrate and the contaminated water in the reaction pressure vessel, and the absolute pressure in the vessel are referred to as a reaction condition. Under this reaction condition, the to-be-treated water in the reaction pressure vessel was brought into circulation contact with the heavy water gas hydrate substrate while forcibly convecting the to-be-treated water in the reaction pressure vessel by always circulating the liquid phase using the external liquid circulation circuit and maintaining a temperature difference caused by the presence of the upper layer and the lower layer so as not to break, and the circulation contact was performed for a certain period of time (1 hour). After the circulation contact, the liquid phase (contaminated water after a tritiated water removal treatment) was recovered as to-be-treated water (treated water) in which tritiated water was reduced from the lower output port 6. The recovery was performed slowly so as not to cause a rapid temperature drop due to pressure reduction. The tritium concentration of the recovered liquid phase was measured by a liquid scintillation method.

Next, the same test was performed with some of the reaction conditions changed. The pressure in the reaction pressure vessel and the temperature difference between the upper temperature and lower temperature of the to-be-treated water containing the heavy water gas hydrate substrate and the contaminated water in the reaction pressure vessel were not changed, and only the setting of the lower temperature of the to-be-treated water was changed to 9.8°C, 10.3°C, 14.3°C, or 14.8°C.

The upper end temperature and the lower end temperature are respectively a measured temperature value of the to-be-treated water in the upper part (upper end) and a measured temperature value of the to-be-treated water in the lower part (lower end) in the reaction pressure vessel. In the actual treatment, the treatment was started from a temperature higher than the temperature at which the gas hydrate was generated. When the temperature is lowered to a temperature at which the composition of the surface of the substrate and the liquidus collide with each other, crystallization occurs there. The temperature at this time is referred to as a liquidus temperature. Unlike the composition of the liquid phase, the composition to be crystallized is a composition indicated by a point where the liquidus temperature and the solidus collide with each other, and due to the difference in the composition, a specific component, that is, tritiated water is selectively crystallized as gas hydrate.

**[Table 1]**

| Table 1: Tritium concentration of contaminated water before and after tritium removal treatment | | | | |
|---|---|---|---|---|
| | Temperature of reaction pressure vessel (°C) | | Tritium concentration of contaminated water (Bq/L) | |
| No. | Lower end temperature (second temperature) | Upper end temperature (first temperature) | Before removal treatment | After removal treatment |
| 1-1 | 9.8 | 14.8 | 4.60 (1) × 10⁵ | 3.29 (2) × 10⁴ |
| 1-2 | 10.3 | 15.3 | | 1.53 (9) × 10³ |
| 1-3 | 12.3 | 17.3 | | 1.55 (8) × 10³ |
| 1-4 | 14.3 | 19.3 | | 1.47 (7) × 10³ |
| 1-5 | 14.8 | 19.8 | | 4.59 (1) × 10⁵ |

| | | | | |
|---|---|---|---|---|
| Values in parentheses represent standard deviation. | | | | |

As shown in Table 1, when the lower end temperature of the to-be-treated water is 2.5°C higher than the thermodynamic equilibrium temperature at which the heavy water gas hydrate is crystallized, tritium in the to-be-treated water containing the heavy water gas hydrate substrate and the contaminated water is not removed. The thermodynamic equilibrium value means a thermodynamic equilibrium temperature measured in an equilibrium state, and 12.3°C can be assumed. If the heavy water gas hydrate and the tritiated water hydrate do not form a solid solution, the tritiated water hydrate should be crystallized under a temperature condition 0.4°C higher than the thermodynamic equilibrium temperature. Therefore, this test result indicates that the heavy water gas hydrate and the tritiated water hydrate form the solid solution.

Generally, the solid solution refers to a solid solution in which two or more kinds of phases (may be a metal element, a non-metal element, and a compound) are dissolved with each other to form a uniform solid phase as a whole, but in the present Example, it is considered that the heavy water gas hydrate and the tritiated water hydrate form the solid solution in the surface layer portion of the base heavy water gas hydrate substrate.

As shown in Table 1, when the lower end temperature of the to-be-treated water is 2.5°C lower than the thermodynamic equilibrium temperature, the tritiated water removal rate from the to-be-treated water containing the heavy water gas hydrate substrate and the contaminated water is significantly reduced. This decrease in the tritiated water removal rate is considered to be caused by the hydrate formation of light water in the to-be-treated water containing the heavy water gas hydrate substrate and the contaminated water, and a relative decrease in the tritiated water removal rate. If the heavy water gas hydrate and the light water hydrate do not form the solid solution, the light water should not be converted to gas hydrate under this condition, and thus such a phenomenon does not occur.

From the above, it is necessary to determine the treatment condition of the to-be-treated water containing the light water contaminated with the tritiated water on the premise that the gas hydrates of light water, heavy water, and tritiated water form the solid solution. Since a crystallization temperature corresponding to a solid solution composition continuously changes by forming the solid solution, even if the treatment is performed under a condition where an end component (in this case, light water gas hydrate) is not crystallized, it is considered that the solid solution cannot be separated because crystallization occurs (as a mixture of the light water and the heavy water).

### <Example 2>

Among the conditions of the test shown in Example 1, the lower end temperature of the to-be-treated water containing the heavy water gas hydrate substrate and the contaminated water in the reaction pressure vessel, and the pressure in the vessel were not changed as they were in a thermodynamic equilibrium condition, and the test was performed while a temperature difference between the lower temperature and upper temperature of the to-be-treated water containing the heavy water gas hydrate substrate and the contaminated water in the reaction pressure vessel was changed. At this time, circulation contact was used in the same manner as in Example 1.

Specifically, the lower end temperature of the to-be-treated water containing the heavy water gas hydrate substrate and the contaminated water in the reaction pressure vessel was set to 12.3°C, the absolute pressure in the vessel was set to 0.37 MPa, and the upper temperature of the to-be-treated water containing the heavy water gas hydrate substrate and the contaminated water in the reaction pressure vessel was set to be 0, 3.0, 5.0, 7.0, or 9.0°C higher than the lower temperature of the to-be-treated water, and a test similar to that in Example 1 was performed.

The reason for setting the temperature difference between the lower temperature and the upper temperature for the temperature gradient is to remelt the hydrate once crystallized. It is considered that the content of light water in the crystal decreases little by little each time the hydrate is crystallized, and the content rate of tritiated water increases at the same time. The increase in the content rate in one crystallization is only due to the difference between the liquidus composition and the solidus composition, but it is considered that when this is dissolved and recrystallized, the light water decreases and the tritiated water increases, and this causes collision with the liquidus at a higher temperature and crystallization. By repeating this, the content rate of the tritiated water increases in the heavy water gas hydrate substrate which may contain tritiated water.

**[Table 2]**

| Table 2: Tritium concentration of contaminated water before and after tritium removal treatment | | | | |
|---|---|---|---|---|
| | Temperature of reaction pressure vessel (°C) | | Tritium concentration of contaminated water (Bq/L) | |
| No. | Lower end temperature (second temperature) | Upper end temperature (first temperature) | Before removal treatment | After removal treatment |
| 2-1 | 12.3 | 21.3 | 4.60 (1) × 10⁵ | - |
| 2-2 | 12.3 | 19.3 | | 2.62 (9) × 10³ |
| 2-3 | 12.3 | 17.3 | | 1.55 (8) × 10³ |
| 2-4 | 12.3 | 15.3 | | 4.47 (9) × 10³ |
| 2-5 | 12.3 | 12.3 | | 4.42 (1) × 10⁵ |

| | | | | |
|---|---|---|---|---|
| Values in parentheses represent standard deviation. | | | | |

When a test was conducted with the upper temperature of the to-be-treated water containing the gas hydrate substrate and the contaminated water in the reaction pressure vessel set to be 9.0°C higher than the lower temperature of the to-be-treated water, the heavy water gas hydrate substrate was partially but apparently melted after the treatment. Therefore, the test example in which the upper temperature was set to 21.3°C and the treatment was performed was excluded from an object to be examined. As shown in Table 2, when the temperature difference between the upper temperature and lower temperature of the to-be-treated water was 0°C (0 K), the tritiated water in the to-be-treated water containing the heavy water gas hydrate substrate and the contaminated water was hardly removed. This indicates that the recrystallization and sweating phenomena of gas hydrate greatly contribute to the removal of the tritiated water from the contaminated water. When the upper temperature of the to-be-treated water in the reaction pressure vessel was set 5.0°C higher than the lower temperature of the to-be-treated water, the maximum removal rate of the tritiated water was obtained.

As described above, it has become clear that by spatially providing a temperature gradient in the to-be-treated water containing the heavy water gas hydrate substrate and the contaminated water in the reaction pressure vessel, the recrystallization and sweating phenomena of the gas hydrate occur at a high frequency, and the tritiated water can be efficiently removed from the contaminated water. However, it is necessary to increase the volume in the reaction pressure vessel when the equipment scale is expanded for practically using. Since there is a limit to the difference (temperature difference) between the upper temperature and the lower temperature in the to-be-treated water containing the heavy water gas hydrate substrate and the contaminated water in the reaction pressure vessel, the temperature gradient per unit distance decreases with the increase in the volume in the reaction pressure vessel considering scale-up, and the occurrence frequency of the recrystallization and sweating phenomena of the gas hydrate similar to those in a small test device cannot be obtained in an enlarged device. Therefore, under a condition where the upper temperature and lower temperature of the to-be-treated water, which can be realized even with a large device, are the same or substantially the same, and the temperature of the to-be-treated water containing the heavy water gas hydrate substrate and the contaminated water is changed with time or periodically, a test was conducted as to whether or not a similar tritium removal effect can be obtained as compared with the effect of a spatial temperature difference.

The sweating phenomenon is a phenomenon generally observed in molecular crystals in which molecules are bonded by van der Waals force or a hydrogen bond, and refers to a phenomenon in which impurities ooze out along grain boundaries and defects of crystals outside the crystals due to an increase in a temperature. Gas hydrates are molecular bonds bonded by hydrogen bonds. ([Reference Document 3] Noriaki KUBOTA, Crystallization Engineering, Tokyo Denki University Press., (2016), pp. 179-180.)

### <Example 3>

Among the conditions of the test shown in Example 1, a pressure in a reaction pressure vessel of Example 3 was the same at an absolute pressure of 0.37 MPa. A temperature difference between the lower temperature and upper temperature of to-be-treated water containing a heavy water gas hydrate substrate and the contaminated water in the reaction pressure vessel was set to 0°C (0 K), and the to-be-treated water was vibrated in a sinusoidal wave form over time between a maximum temperature of 17.3°C (upper end temperature) and a minimum temperature of 12.3°C (lower end temperature).

The sinusoidal vibration was performed by controlling the liquid phase of the to-be-treated water passing through a warm refrigerant temperature control mechanism 8 for an external liquid circulation circuit to have a desired temperature to change the temperature of the to-be-treated water in the reaction pressure vessel 1. The circulation contact of the gas hydrate substrate which may contain tritiated water with the contaminated water easily occurs in the reaction system by circulating the liquid, so that there is an advantage that a tritium concentration in light water can be more easily and efficiently reduced, and the tritium concentration in the gas hydrate substrate can be further increased.

The liquid phase is a liquid of to-be-treated water mainly containing tritiated water and light water, but may contain the gas hydrate substrate within a range in which circulation is not hindered.

The vibration cycle (one cycle) was set to 10 minutes, and the same test as in Example 1 was performed. One cycle was set to "maximum temperature → minimum temperature → maximum temperature" or "minimum temperature → maximum temperature → minimum temperature". The total reaction time was 1 hour.

The vibration over time can be performed by changing the temperature of the to-be-treated water containing the heavy water gas hydrate substrate in the reaction pressure vessel by a warm refrigerant temperature control mechanism 7 for the reaction pressure vessel. The case where the temperature is changed by a warm refrigerant temperature control mechanism 8 for the external liquid circulation circuit is suitable because circulation contact between the gas hydrate substrate which may contain tritiated water and the contaminated water easily occurs due to external liquid circulation.

**[Table 3]**

| Table 3: Tritium concentration of contaminated water before and after tritium removal treatment | | | |
|---|---|---|---|
| Temperature of reaction pressure vessel (°C) | | Tritium concentration of contaminated water (Bq/L) | |
| | | Before removal treatment | After removal treatment |
| Temperature: constant | | 4.60 (1) × 10⁵ | 1.55 (8) × 10³ |
| Lower end temperature (second temperature) | Upper end temperature (first temperature) | | |
| 12.3 | 17.3 | | |
| Temperature vibration | | | 4.47 (9) × 10³ |
| Minimum | Maximum | | |
| 12.3 | 17.3 | | |

| | | | |
|---|---|---|---|
| Values in parentheses represent standard deviation. | | | |

As shown in Table 3, the temperature difference between the upper temperature and lower temperature of the to-be-treated water containing the heavy water gas hydrate substrate and the contaminated water was constant, and there was no significant difference in a tritium removal rate between the case of setting a regional temperature gradient and the case of vibrating the temperature of the to-be-treated water containing the heavy water gas hydrate substrate and the contaminated water with time or periodically without providing the regional temperature gradient. Therefore, it was shown that a sufficient tritiated water removal rate can be obtained also by vibrating the temperature of the to-be-treated water containing the heavy water gas hydrate substrate and the contaminated water with time or periodically. As a result, it is possible to treat a larger amount of the to-be-treated water containing the light water contaminated with the tritiated water due to an increase in size of the device, and it is possible to more easily perform temperature control in a wave form.

The present inventor has found that a complete solid solution in which light water gas hydrate, heavy water gas hydrate, and tritiated water gas hydrate are mixed at an arbitrary ratio can be formed when the method for treating the to-be-treated water containing the light water contaminated with the tritiated water is intensively studied. It has been found that the temperature at which they are converted to gas hydrate continuously varies depending on a composition ratio, and specifically, the following (A) to (D) have been considered (see Figs. 5 and 6).
(A) When the temperature of a liquid phase having a certain composition ratio decreases under a certain pressure, a temperature at which crystallization starts is a liquidus temperature. The composition of the crystallized gas hydrate is a solidus composition with respect to a liquidus temperature. Therefore, the composition of the liquid phase is different from the composition of the gas hydrate, and in the gas hydrate crystal, the concentration of a component stable at a higher temperature increases, and the concentration of a component at a lower temperature decreases. This change in concentration serves as a driving force for the precipitation of gas hydrate having a higher tritium concentration and a lower light water concentration than those in the liquid phase on the heavy water gas hydrate substrate.
(B) Meanwhile, at the operation temperature, a conventional heavy water gas hydrate (simple) is crystallized, but at the temperature at which the light water gas hydrate (simple) is not crystallized, the gas hydrate of the mixed phase of the heavy water and the light water is crystallized, so that the effect of eliminating the light water is small. However, also in this temperature region, according to the above-described principle, the composition in the gas hydrate crystal has a higher concentration of the heavy water as a high-temperature component and a lower concentration of the light water as compared with the composition of the liquid phase.
(C) The ideal operation temperature is slightly above the temperature at which the gas hydrate (single) is crystallized. About how the operation temperature is slightly above the temperature, the concentration of tritium originally contained in the liquid phase is very slight, so that there is no problem in practical use as a temperature at which the heavy water gas hydrate (single) is crystallized.
(D) In the pressure range, there is no problem in practical use as long as the heavy water gas hydrate (simple) has a pressure capable of being crystallized. In the case of a wide range, the pressure may be set such that the heavy water gas hydrate (simple) or the tritiated water gas hydrate (simple) can be crystallized.

### EXPLANATION OF REFERENCES

1: reaction pressure vessel
2: external circulation circuit (with valve)
3: external circulation pump
4: input port (with valve)
5: upper output port (with valve)
6: lower output port (with valve)
7: jacket-type warm refrigerant temperature control mechanism (reaction pressure vessel)
8: jacket-type warm refrigerant temperature control mechanism (external circulation circuit)
9: pressure sensor
10: upper temperature sensor
11: lower temperature sensor
100: device for treating to-be-treated water containing light water contaminated with tritiated water

### INDUSTRIAL APPLICABILITY

According to the present technique, a tritium concentration in light water contaminated with tritiated water can be more easily and more efficiently reduced, and thus light water having a tritium concentration less than or equal to a reference tritium concentration value contained in drinking water of the World Health Organization (WHO) can also be obtained. According to the present technique, heavy water gas hydrate containing tritiated water having a high tritium concentration can be formed, whereby the tritiated water can be more easily and more efficiently recovered. The present technique can also be applied to large-scale plants. The present technique can be used in fields related to tritium, such as a tritium decontamination field, a water treatment field, and a tritium utilization field.

The present technique can also adopt the following configurations.
- [1] A method for treating to-be-treated water containing tritiated water and light water, a method for treating to-be-treated water containing light water contaminated with tritiated water, a method for separating tritiated water from contaminated water, or a method for producing a heavy water gas hydrate substrate containing tritiated water, the method including providing a temperature difference in a heavy water gas hydrate substrate which may contain tritiated water, and to-be-treated water containing tritiated water and light water in the presence of a guest molecular gas based on a heavy water gas hydrate crystallization temperature zone and its vicinity under a pressure condition where heavy water gas hydrate or tritiated water gas hydrate can be crystallized.
- [2] The method according to the above [1], wherein providing the temperature difference means providing a temperature difference due to spatial variation and/or a temperature difference due to temporal variation, and the temperature difference is suitably a temperature difference between a first temperature and a second temperature, and more suitably a temperature difference between an upper temperature (first temperature) and a lower temperature (second temperature) of the to-be-treated water, or a temperature difference between a maximum temperature (first temperature) and a minimum temperature (second temperature) when a temperature of the to-be-treated water is vibrated with time.
- [3] The method according to the above [1] or [2], wherein the temperature difference is a temperature difference between a first temperature of the to-be-treated water and a second temperature lower than the first temperature in a reaction system, and the temperature difference is 2.0 to 8.0°C (2.0 to 8.0 K).
- [4] The method according to any one of the above [2] or [3], wherein the second temperature is 8.0 to 21.0°C.
- [5] The method according to any one of the above [1] to [4], wherein by providing the temperature difference, the tritiated water in the to-be-treated water is taken in the heavy water gas hydrate substrate to form the heavy water gas hydrate substrate containing tritiated water having a higher tritium concentration than that of the heavy water gas hydrate substrate, thereby separating the tritiated water from the to-be-treated water containing tritiated water and light water.
- [6] The method according to any one of [1] to [5], further including bringing the to-be-treated water containing tritiated water and light water into circulation contact with the heavy water gas hydrate substrate in the presence of the guest molecular gas.
- [7] The method according to any one of the above [1] to [6], wherein the tritiated water in the to-be-treated water is taken in the formed heavy water gas hydrate substrate containing tritiated water to form the heavy water gas hydrate substrate containing tritiated water having a higher concentration than that of the heavy water gas hydrate substrate.
- [8] A device for treating to-be-treated water containing light water contaminated with tritiated water, the device causing a computer or the like or a control unit to execute the method according to any one of the above [1] to [7]. The device suitably includes a program configured to execute the method of any one of the above [1] to [7], and/or (b) a recording medium recording or storing the program. The device suitably accesses the program or the medium present outside the device to execute the method of any one of the above [1] to [7]. The recording medium may be a computer recording medium having a computer-executable instruction.
- [9] A device for treating to-be-treated water containing light water contaminated with tritiated water, the device including at least: a reaction pressure vessel configured to be able to perform a reaction of the method of any one of the above [1] to [7]; a temperature control mechanism (temperature control means) configured to be able to control a temperature of the reaction pressure vessel; and supply discharge means configured to be able to supply and discharge the to-be-treated water. The treatment device suitably further includes a control unit for controlling the reaction, and includes the method, the program, and the recording medium described in the above [8]. More specifically, the method described in the above [8], or the like is more suitably stored in the control unit.

More suitably, the device further includes a circulation pipe connecting the upper part and bottom part of the reaction pressure vessel and a second temperature control unit capable of controlling the temperature of circulating water moving through the circulation pipe.

## Claims

1. A method for treating to-be-treated water containing tritiated water and light water, the method comprising providing a temperature difference in a heavy water gas hydrate substrate which may contain tritiated water, and to-be-treated water containing tritiated water and light water in the presence of a guest molecular gas based on a heavy water gas hydrate crystallization temperature zone and its vicinity under a pressure condition where heavy water gas hydrate or tritiated water gas hydrate can be crystallized.

2. The method for treating to-be-treated water containing tritiated water and light water according to claim 1, wherein providing the temperature difference means
providing a temperature difference between an upper temperature and a lower temperature of the to-be-treated water, or
vibrating a temperature of the to-be-treated water with time.

3. The method for treating to-be-treated water containing tritiated water and light water according to claim 1 or 2, wherein the temperature difference is a temperature difference between a first temperature of the to-be-treated water and a second temperature lower than the first temperature in a reaction system, and the temperature difference is 2.0 to 8.0°C.

4. The method for treating to-be-treated water containing tritiated water and light water according to claim 3, wherein the second temperature is 8.0 to 21.0°C.

5. The method for treating to-be-treated water containing tritiated water and light water according to any one of claims 1 to 4, wherein by providing the temperature difference, the tritiated water in the to-be-treated water is taken in the heavy water gas hydrate substrate to form the heavy water gas hydrate substrate containing tritiated water having a higher tritium concentration than that of the heavy water gas hydrate substrate, thereby separating the tritiated water from the to-be-treated water containing tritiated water and light water.

6. The method for treating to-be-treated water containing tritiated water and light water according to any one of claims 1 to 5, further comprising circulating the to-be-treated water containing tritiated water and light water and bringing the to-be-treated water into contact with the heavy water gas hydrate substrate in the presence of the guest molecular gas.

7. A method for producing a heavy water gas hydrate substrate containing tritiated water, the method comprising providing a temperature difference in a heavy water gas hydrate substrate which may contain tritiated water, and to-be-treated water containing tritiated water and light water in the presence of a guest molecular gas based on a heavy water gas hydrate crystallization temperature zone and its vicinity under a pressure condition where heavy water gas hydrate or tritiated water gas hydrate can be crystallized, to take the tritiated water in the to-be-treated water into the heavy water gas hydrate substrate, thereby forming the heavy water gas hydrate substrate containing tritiated water.

8. The method for producing a heavy water gas hydrate substrate containing tritiated water according to claim 7, wherein tritiated water in the to-be-treated water is taken in the formed heavy water gas hydrate substrate containing tritiated water to form the heavy water gas hydrate substrate containing tritiated water having a higher concentration than that of the heavy water gas hydrate substrate.
